# EUROPEAN PATENT APPLICATION

(11) **EP 4 852 554 A1**
(43) Date of publication of application: **09.12.2026**
(21) Application number: 24920977.6
(22) Date of filing: 01.02.2024
(51) Int. Cl.: H04W 72/04

(54) **INFORMATION TRANSMISSION METHOD, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2024/075350
(87) International publication number: WO 2025/160914

(57) **Abstract**

Embodiments of the present disclosure relate to an information transmission method, a device, and a storage medium. The method comprises: a terminal device sends first information to a network device, wherein the first information is information corresponding to a first function, the first function is supported by the terminal device and is an artificial intelligence (AI) function and/or an AI model used for performing beam prediction, and the first information comprises at least one of the following: second information, comprising information supported by the terminal device and used for performing performance monitoring on the first function; third information, comprising content information output by the first function supported by the terminal device; and fourth information, comprising a function identifier of the first function supported by the terminal device. In this way, the terminal device can report information related to the first function supported by the terminal device, thereby improving the flexibility of first function management.

## Description

### TECHNICAL FIELD

The present disclosure relates to the field of communication technologies, and in particular, to an information transmission method, a device, and a storage medium.

### BACKGROUND

With the advancement of communication technologies, a prediction function based on artificial intelligence (AI) has been introduced into wireless communication systems. The prediction function may be an AI function and/or an AI model, and prediction data in certain scenarios can be obtained by means of the prediction function, thereby improving performance of a network.

### SUMMARY

Embodiments of the present disclosure provide an information transmission method, a device, and a storage medium.

According to a first aspect of the embodiments of the present disclosure, there is provided an information transmission method, performed by a terminal device, including:
sending first information to a network device, in which the first information corresponds to a first function, and the first function is an artificial intelligence (AI) function and/or an AI model supported by the terminal device and used to perform beam prediction;
in which the first information includes at least one of:
   second information, in which the second information includes information for monitoring a performance of the first function supported by the terminal device;
   third information, in which the third information includes content information output by the first function supported by the terminal device; or
   fourth information, in which the fourth information includes a function identifier of the first function supported by the terminal device.

According to a second aspect of the embodiments of the present disclosure, there is provided an information transmission method, performed by a network device, including:
receiving first information sent by a terminal device, in which the first information corresponds to a first function, and the first function is an artificial intelligence (AI) function and/or an AI model supported by the terminal device and used to perform beam prediction;
in which the first information includes at least one of:
   second information, in which the second information includes information for monitoring a performance of the first function supported by the terminal device;
   third information, in which the third information includes content information output by the first function supported by the terminal device; or
   fourth information, in which the fourth information includes a function identifier of the first function supported by the terminal device.

According to a third aspect of the embodiments of the present disclosure, there is provided a terminal device, including:
a transceiver module, configured to send first information to a network device, in which the first information corresponds to a first function, and the first function is an artificial intelligence (AI) function and/or an AI model supported by the terminal device and used to perform beam prediction;
in which the first information includes at least one of:
   second information, in which the second information includes information for monitoring a performance of the first function supported by the terminal device;
   third information, in which the third information includes content information output by the first function supported by the terminal device;
   fourth information, in which the fourth information includes a function identifier of the first function supported by the terminal device.

According to a fourth aspect of the embodiments of the present disclosure, there is provided a network device, including:
a transceiver module, configured to receive first information sent by a terminal device, in which the first information corresponds to a first function, and the first function is an artificial intelligence (AI) function and/or an AI model supported by the terminal device and used to perform beam prediction;
in which the first information includes at least one of:
   second information, in which the second information includes information for monitoring a performance of the first function supported by the terminal device;
   third information, in which the third information includes content information output by the first function supported by the terminal device; or
   fourth information, in which the fourth information includes a function identifier of the first function supported by the terminal device.

According to a fifth aspect of the embodiments of the present disclosure, there is provided a communication device including one or more processors, in which the communication device may be configured to perform the optional implementations of the first aspect or the second aspect.

According to a sixth aspect of the embodiments of the present disclosure, there is provided a storage medium storing instructions that, when executed by a communication device, cause the communication device to perform the method described in the optional implementations of the first aspect or the second aspect.

According to a seventh aspect of the embodiments of the present disclosure, there is provided a communication system including a terminal device and a network device, in which the terminal device is configured to perform the method described in the optional implementations of the first aspect, and the network device is configured to perform the method described in the optional implementations of the second aspect.

The technical solutions provided by the embodiments of the present disclosure may include the following beneficial effects: a terminal device sends first information to a network device, in which the first information corresponds to a first function, and the first function is an artificial intelligence (AI) function and/or an AI model supported by the terminal device and used to perform beam prediction; the first information includes at least one of: second information including information for monitoring a performance of the first function supported by the terminal device; third information including content information output by the first function supported by the terminal device; or fourth information including a function identifier of the first function supported by the terminal device. In this way, the terminal device can report information related to the first function supported by the terminal device, so that flexibility of management of the first function can be improved.

It should be understood that the foregoing general description and the following detailed description are merely exemplary and explanatory, and cannot limit the present disclosure.

### BRIEF DESCRIPTION OF THE DRAWINGS

In order to describe the technical solutions in the embodiments of the present disclosure more clearly, the accompanying drawings required for describing the embodiments are introduced below. The following accompanying drawings are merely some embodiments of the present disclosure, and do not constitute a specific limitation on the protection scope of the present disclosure.
FIG. 1 is a schematic architecture diagram of a communication system according to an embodiment of the present disclosure.
FIG. 2A is a schematic interaction diagram of an information transmission method according to an embodiment of the present disclosure.
FIG. 2B is a schematic interaction diagram of an information transmission method according to an embodiment of the present disclosure.
FIG. 3A is a schematic flowchart of an information transmission method according to an embodiment of the present disclosure.
FIG. 3B is a schematic flowchart of an information transmission method according to an embodiment of the present disclosure.
FIG. 4A is a schematic flowchart of an information transmission method according to an embodiment of the present disclosure.
FIG. 4B is a schematic flowchart of an information transmission method according to an embodiment of the present disclosure.
FIG. 5 is a schematic flowchart of an information transmission method according to an embodiment of the present disclosure.
FIG. 6A is a schematic structural diagram of a terminal device according to an embodiment of the present disclosure.
FIG. 6B is a schematic structural diagram of a network device according to an embodiment of the present disclosure.
FIG. 7A is a schematic structural diagram of a communication device according to an embodiment of the present disclosure.
FIG. 7B is a schematic structural diagram of a chip according to an embodiment of the present disclosure.

### DETAILED DESCRIPTION

Embodiments of the present disclosure provide an information transmission method, a device, and a storage medium.

In a first aspect, the embodiments of the present disclosure provide an information transmission method, performed by a terminal device, including:
sending first information to a network device, in which the first information corresponds to a first function, and the first function is an artificial intelligence (AI) function and/or an AI model supported by the terminal device and used to perform beam prediction;
in which the first information includes at least one of:
   second information, in which the second information includes information for monitoring a performance of the first function supported by the terminal device;
   third information, in which the third information includes content information output by the first function supported by the terminal device; or
   fourth information, in which the fourth information includes a function identifier of the first function supported by the terminal device.

In the foregoing embodiments, the terminal device can report, by means of the first information, information related to the first function supported by the terminal device, so that flexibility of management of the first function can be improved.

With reference to some embodiments of the first aspect, in some embodiments, the second information includes a performance monitoring type, and the performance monitoring type includes any one of:
a first type of performance monitoring;
a second type of performance monitoring; and
a third type of performance monitoring.

In the foregoing embodiments, the terminal device can report the supported performance monitoring type, so that flexibility and reliability of monitoring the performance of the first function can be improved.

With reference to some embodiments of the first aspect, in some embodiments, the performance monitoring type is the first type of performance monitoring, and the method further includes at least one of:
receiving fifth information sent by the network device, in which the fifth information is used to instruct the terminal device to perform measurement and/or reporting;
sending sixth information to the network device, in which the sixth information is a report obtained by the terminal device by performing the measurement; or
receiving seventh information sent by the network device, in which the seventh information is used to instruct the terminal device to perform a first operation on the first function, and the first operation includes any one of: selection, activation, deactivation, switching, or fallback; and
performing the first operation on the first function according to the seventh information.

With reference to some embodiments of the first aspect, in some embodiments, the sixth information includes at least one of:
measured beam information, in which the measured beam information includes beam information measured by the terminal device;
predicted beam information, in which the predicted beam information is beam information predicted and obtained by the terminal device by using the first function;
performance metric information, in which the performance metric information is used to determine at least one of a prediction accuracy, a complexity, or a signaling overhead of the first function; or
event information, in which the event information is information about a triggering event based on which the terminal device triggers the sixth information.

In the foregoing embodiments, the terminal device can support the first type of performance monitoring.

With reference to some embodiments of the first aspect, in some embodiments, the performance monitoring type is the second type of performance monitoring, and the method further includes at least one of:
obtaining performance metric information corresponding to the first function, in which the performance metric information is used to determine at least one of a prediction accuracy, a complexity, or a signaling overhead of the first function; or
sending eighth information to the network device, in which the eighth information includes at least one of the performance metric information or information about a triggering event that triggers the eighth information.

With reference to some embodiments of the first aspect, in some embodiments, the performance monitoring type is the second type of performance monitoring, and the method further includes at least one of:
determining a first operation to be performed on the first function, in which the first operation includes any one of: selection, activation, deactivation, switching, or fallback; or
sending ninth information to the network device, in which the ninth information is used to indicate the first operation determined by the terminal device.

With reference to some embodiments of the first aspect, in some embodiments, the method further includes:
receiving tenth information sent by the network device, in which the tenth information is response information for the ninth information; and
performing the first operation on the first function.

With reference to some embodiments of the first aspect, in some embodiments, the method further includes:
sending eleventh information to the network device, in which the eleventh information is used to request to start monitoring the performance of the first function; or
receiving twelfth information sent by the network device, in which the twelfth information is used to respond to the eleventh information.

In the foregoing embodiments, the terminal device can support the second type of performance monitoring.

With reference to some embodiments of the first aspect, in some embodiments, the performance monitoring type is the third type of performance monitoring, and the method further includes at least one of:
obtaining performance metric information corresponding to the first function, in which the performance metric information is used to determine at least one of a prediction accuracy, a complexity, or a signaling overhead of the first function; or
sending thirteenth information to the network device, in which the thirteenth information includes at least one of the performance metric information or information about a triggering event that triggers the thirteenth information.

In the foregoing embodiments, the terminal device can support the third type of performance monitoring.

With reference to some embodiments of the first aspect, in some embodiments, the second information includes a performance metric type, and the performance metric type is used to indicate a performance metric supported by the terminal device.

With reference to some embodiments of the first aspect, in some embodiments, the performance metric includes at least one of:
a beam prediction accuracy, in which the beam prediction accuracy is a probability that a predicted optimal reference signal resource includes an actual optimal reference signal resource, the predicted optimal reference signal resource is an optimal reference signal resource obtained through prediction by the first function, the actual optimal reference signal resource is an optimal reference signal resource obtained through actual measurement by the terminal device, the optimal reference signal resource includes top N reference signal resources having strongest signal strengths in a predicted second reference signal resource set, and N is a positive integer;
a first signal strength difference, in which the first signal strength difference is a difference between a first signal strength and a second signal strength, the first signal strength is an actual signal strength of the predicted optimal reference signal resource, and the second signal strength is an actual signal strength of the actual optimal reference signal resource;
a second signal strength difference, in which the second signal strength difference is a difference between a first signal strength and a third signal strength, the first signal strength is an actual signal strength of the predicted optimal reference signal resource, and the third signal strength is a predicted signal strength of the predicted optimal reference signal resource;
a third signal strength difference, in which the third signal strength difference is a difference between a second signal strength and a fourth signal strength, the second signal strength is an actual signal strength of the actual optimal reference signal resource, and the fourth signal strength is a predicted signal strength of the actual optimal reference signal resource;
a first signal strength prediction accuracy metric, in which the first signal strength prediction accuracy metric is a probability that a first signal strength difference falls within a first difference range, or an average value of the first signal strength difference, or a value of a cumulative distribution function of the first signal strength difference at a first distribution proportion, and the first distribution proportion is greater than 0 and less than 1;
a second signal strength prediction accuracy metric, in which the second signal strength prediction accuracy metric is a probability that a second signal strength difference falls within a first difference range, or an average value of the second signal strength difference, or a value of a cumulative distribution function of the second signal strength difference at a first distribution proportion;
a third signal strength prediction accuracy metric, in which the third signal strength prediction accuracy metric is a probability that a third signal strength difference falls within a first difference range, or an average value of the third signal strength difference, or a value of a cumulative distribution function of the third signal strength difference at a first distribution proportion;
a throughput difference, in which the throughput difference is a difference between a first throughput and a second throughput, the first throughput is a throughput calculated based on a first SINR, the second throughput is a throughput calculated based on a second SINR, the first SINR is an actual SINR of the predicted optimal reference signal resource, and the second SINR is an actual SINR of the actual optimal reference signal resource;
a throughput prediction accuracy metric, in which the throughput prediction accuracy metric is a probability that the throughput difference falls within a second difference range, or an average value of the throughput difference, or a value of a cumulative distribution function of the throughput difference at a second distribution proportion, and the second distribution proportion is greater than 0 and less than 1;
a reference signal overhead, in which the reference signal overhead is used to indicate a quantity of reference signal resources required by the first function;
an uplink resource overhead, in which the uplink resource overhead is used to indicate a quantity of uplink resources occupied by information that needs to be reported to the network device for the first function to perform prediction and/or for monitoring the performance;
a prediction latency, in which the prediction latency is a duration taken by the first function to perform beam prediction;
input data distribution information, in which the input data distribution information is distribution information of input data of the first function;
output data distribution information, in which the output data distribution information is distribution information of output data of the first function; or
a model complexity.

In the foregoing embodiments, the terminal device can report, through the second information, the performance metrics supported by the terminal device, thereby improving flexibility and reliability of function operations.

With reference to some embodiments of the first aspect, in some embodiments, the second information includes an event type, and the event type is used to indicate a type of an event that is supported by the terminal device and that triggers monitoring the performance.

With reference to some embodiments of the first aspect, in some embodiments, the event type includes at least one of:
a first type of event, in which the first type of event is used to indicate that a performance metric of an activated first function is worse than a first threshold;
a second type of event, in which the second type of event is used to indicate that a performance metric of a deactivated first function is better than a second threshold;
a third type of event, in which the third type of event is used to indicate that a performance metric of an activated first function is worse than a first threshold and that a performance metric of a deactivated first function is better than a second threshold; or
a fourth type of event, in which the fourth type of event is used to indicate that a first difference is better than a fourth threshold, the first difference is a difference by which a second performance metric is better than a first performance metric, the first performance metric is a performance metric of an activated first function, and the second performance metric is a performance metric of a deactivated first function.

In the foregoing embodiments, the terminal device can report, through the second information, the type of event that triggers performance monitoring, thereby improving flexibility and reliability of function operations.

With reference to some embodiments of the first aspect, in some embodiments, the third information includes at least one of:
a reference signal resource identifier;
a signal strength; or
a confidence corresponding to a signal strength.

In the foregoing embodiments, the terminal device can report, by means of the third information, the information output by the first function, so as to improve flexibility and reliability of function operations.

With reference to some embodiments of the first aspect, in some embodiments,
the confidence is used to indicate the signal strength is obtained through actual measurement or through prediction; or
the signal strength is obtained through prediction, and the confidence is used to indicate a prediction accuracy corresponding to the signal strength.

In the foregoing embodiments, the terminal device can report, by means of the confidence, the prediction accuracy of the information output by the first function, so as to improve reliability of function operations.

With reference to some embodiments of the first aspect, in some embodiments, the first information is carried in a terminal capability report.

In the foregoing embodiments, the reporting of the first information is implemented by means of an existing procedure.

With reference to some embodiments of the first aspect, in some embodiments, instances of information included in the first information include mandatory information and optional information.

In the foregoing embodiments, flexibility of information transmission can be improved.

With reference to some embodiments of the first aspect, in some embodiments, the first function is deployed on the terminal device and/or the network device.

In the foregoing embodiments, the information related to the first function can be reported for different function deployment scenarios.

In a second aspect, the embodiments of the present disclosure provide an information transmission method, performed by a network device, including:
receiving first information sent by a terminal device, in which the first information corresponds to a first function, and the first function is an artificial intelligence (AI) function and/or an AI model supported by the terminal device and used to perform beam prediction;
in which the first information includes at least one of:
   second information, in which the second information includes information for monitoring a performance of the first function supported by the terminal device;
   third information, in which the third information includes content information output by the first function supported by the terminal device; or
   fourth information, in which the fourth information includes a function identifier of the first function supported by the terminal device.

In the foregoing embodiments, the network device can obtain, by means of the first information, the information related to the first function supported by the terminal device, so that flexibility of management of the first function can be improved.

With reference to some embodiments of the second aspect, in some embodiments, the second information includes a performance monitoring type, and the performance monitoring type includes any one of:
a first type of performance monitoring;
a second type of performance monitoring; and
a third type of performance monitoring.

With reference to some embodiments of the second aspect, in some embodiments, the performance monitoring type is the first type of performance monitoring, and the method further includes at least one of:
sending fifth information to the terminal device, in which the fifth information is used to instruct the terminal device to perform measurement and/or reporting;
receiving sixth information sent by the terminal device, in which the sixth information is a report obtained by the terminal device by performing the measurement; or
determining a first operation according to the sixth information; and
sending seventh information to the terminal device, in which the seventh information is used to instruct the terminal device to perform the first operation on the first function, and the first operation includes any one of: selection, activation, deactivation, switching, or fallback.

With reference to some embodiments of the second aspect, in some embodiments, the sixth information includes at least one of:
measured beam information, in which the measured beam information includes beam information measured by the terminal device;
predicted beam information, in which the predicted beam information is beam information predicted and obtained by the terminal device by using the first function;
performance metric information, in which the performance metric information is used to determine at least one of a prediction accuracy, a complexity, or a signaling overhead of the first function; or
event information, in which the event information is information about a triggering event based on which the terminal device triggers the sixth information.

With reference to some embodiments of the second aspect, in some embodiments, the performance monitoring type is the second type of performance monitoring, and the method further includes:
receiving eighth information sent by the terminal device, in which the eighth information includes at least one of performance metric information or information about a triggering event that triggers the eighth information, and the performance metric information is used to determine at least one of a prediction accuracy, a complexity, or a signaling overhead of the first function.

With reference to some embodiments of the second aspect, in some embodiments, the performance monitoring type is the second type of performance monitoring, and the method further includes:
receiving ninth information sent by the terminal device, in which the ninth information is used to indicate a first operation that the terminal device determines to perform on the first function, and the first operation includes any one of: selection, activation, deactivation, switching, or fallback.

With reference to some embodiments of the second aspect, in some embodiments, the method further includes:
sending tenth information to the terminal device, in which the tenth information is response information for the ninth information.

With reference to some embodiments of the second aspect, in some embodiments, the method further includes:
receiving eleventh information sent by the terminal device, in which the eleventh information is used to request to start monitoring the performance of the first function; or
sending twelfth information to the terminal device, in which the twelfth information is used to respond to the eleventh information.

With reference to some embodiments of the second aspect, in some embodiments, the performance monitoring type is the third type of performance monitoring, and the method further includes:
receiving thirteenth information sent by the terminal device, in which the thirteenth information includes at least one of performance metric information or information about a triggering event that triggers the thirteenth information, and the performance metric information is used to determine at least one of a prediction accuracy, a complexity, or a signaling overhead of the first function.

With reference to some embodiments of the second aspect, in some embodiments, the second information includes a performance metric type, and the performance metric type is used to indicate a performance metric supported by the terminal device.

With reference to some embodiments of the second aspect, in some embodiments, the performance metric includes at least one of:
a beam prediction accuracy, in which the beam prediction accuracy is a probability that a predicted optimal reference signal resource includes an actual optimal reference signal resource, the predicted optimal reference signal resource is an optimal reference signal resource obtained through prediction by the first function, the actual optimal reference signal resource is an optimal reference signal resource obtained through actual measurement by the terminal device, the optimal reference signal resource includes top N reference signal resources having strongest signal strengths in a predicted second reference signal resource set, and N is a positive integer;
a first signal strength difference, in which the first signal strength difference is a difference between a first signal strength and a second signal strength, the first signal strength is an actual signal strength of the predicted optimal reference signal resource, and the second signal strength is an actual signal strength of the actual optimal reference signal resource;
a second signal strength difference, in which the second signal strength difference is a difference between a first signal strength and a third signal strength, the first signal strength is an actual signal strength of the predicted optimal reference signal resource, and the third signal strength is a predicted signal strength of the predicted optimal reference signal resource;
a third signal strength difference, in which the third signal strength difference is a difference between a second signal strength and a fourth signal strength, the second signal strength is an actual signal strength of the actual optimal reference signal resource, and the fourth signal strength is a predicted signal strength of the actual optimal reference signal resource;
a first signal strength prediction accuracy metric, in which the first signal strength prediction accuracy metric is a probability that a first signal strength difference falls within a first difference range, or an average value of the first signal strength difference, or a value of a cumulative distribution function of the first signal strength difference at a first distribution proportion, and the first distribution proportion is greater than 0 and less than 1;
a second signal strength prediction accuracy metric, in which the second signal strength prediction accuracy metric is a probability that a second signal strength difference falls within a first difference range, or an average value of the second signal strength difference, or a value of a cumulative distribution function of the second signal strength difference at a first distribution proportion;
a third signal strength prediction accuracy metric, in which the third signal strength prediction accuracy metric is a probability that a third signal strength difference falls within a first difference range, or an average value of the third signal strength difference, or a value of a cumulative distribution function of the third signal strength difference at a first distribution proportion;
a throughput difference, in which the throughput difference is a difference between a first throughput and a second throughput, the first throughput is a throughput calculated based on a first SINR, the second throughput is a throughput calculated based on a second SINR, the first SINR is an actual SINR of the predicted optimal reference signal resource, and the second SINR is an actual SINR of the actual optimal reference signal resource;
a throughput prediction accuracy metric, in which the throughput prediction accuracy metric is a probability that the throughput difference falls within a second difference range, or an average value of the throughput difference, or a value of a cumulative distribution function of the throughput difference at a second distribution proportion, and the second distribution proportion is greater than 0 and less than 1;
a reference signal overhead, in which the reference signal overhead is used to indicate a quantity of reference signal resources required by the first function;
an uplink resource overhead, in which the uplink resource overhead is used to indicate a quantity of uplink resources occupied by information that needs to be reported to the network device for the first function to perform prediction and/or for monitoring the performance;
a prediction latency, in which the prediction latency is a duration taken by the first function to perform beam prediction;
input data distribution information, in which the input data distribution information is distribution information of input data of the first function;
output data distribution information, in which the output data distribution information is distribution information of output data of the first function; or
a model complexity.

With reference to some embodiments of the second aspect, in some embodiments, the second information includes an event type, and the event type is used to indicate a type of an event that is supported by the terminal device and that triggers monitoring the performance.

With reference to some embodiments of the second aspect, in some embodiments, the event type includes at least one of:
a first type of event, in which the first type of event is used to indicate that a performance metric of an activated first function is worse than a first threshold;
a second type of event, in which the second type of event is used to indicate that a performance metric of a deactivated first function is better than a second threshold;
a third type of event, in which the third type of event is used to indicate that a performance metric of an activated first function is worse than a first threshold and that a performance metric of a deactivated first function is better than a second threshold; or
a fourth type of event, in which the fourth type of event is used to indicate that a first difference is better than a fourth threshold, the first difference is a difference by which a second performance metric is better than a first performance metric, the first performance metric is a performance metric of an activated first function, and the second performance metric is a performance metric of a deactivated first function.

With reference to some embodiments of the second aspect, in some embodiments, the third information includes at least one of:
a reference signal resource identifier;
a signal strength; or
a confidence corresponding to a signal strength.

With reference to some embodiments of the second aspect, in some embodiments,
the confidence is used to indicate the signal strength is obtained through actual measurement or through prediction; or
the signal strength is obtained through prediction, and the confidence is used to indicate a prediction accuracy corresponding to the signal strength.

With reference to some embodiments of the second aspect, in some embodiments, the first information is carried in a terminal capability report.

With reference to some embodiments of the second aspect, in some embodiments, instances of information included in the first information include mandatory information and optional information.

With reference to some embodiments of the second aspect, in some embodiments, the first function is deployed on the terminal device and/or the network device.

In a third aspect, the embodiments of the present disclosure provide a terminal device, in which the terminal device may include at least one of a transceiver module and a processing module; and the terminal device may be configured to perform the optional implementations of the first aspect.

In a fourth aspect, the embodiments of the present disclosure provide a network device, in which the network device may include at least one of a transceiver module and a processing module; and the network device may be configured to perform the optional implementations of the second aspect.

In a fifth aspect, the embodiments of the present disclosure provide a communication device including one or more processors, in which the communication device may be configured to perform the optional implementations of the first aspect or the second aspect.

In a sixth aspect, the embodiments of the present disclosure provide a storage medium storing instructions that, when executed by a communication device, cause the communication device to perform the method described in the optional implementations of the first aspect or the second aspect.

In a seventh aspect, the embodiments of the present disclosure provide a computer program product including a computer program and/or instructions that, when executed by a communication device, cause the communication device to perform the method described in the optional implementations of the first aspect or the second aspect.

In an eighth aspect, the embodiments of the present disclosure provide a computer program that, when executed by a computer, causes the computer to perform the method described in the optional implementations of the first aspect or the second aspect.

In a ninth aspect, the embodiments of the present disclosure provide a chip or a chip system. The chip or the chip system includes a processing circuit configured to perform the method described in the optional implementations of the first aspect or the second aspect.

In a tenth aspect, the embodiments of the present disclosure provide a communication system including a terminal device and a network device, in which the terminal device is configured to perform the method described in the optional implementations of the first aspect, and the network device is configured to perform the method described in the optional implementations of the second aspect.

It may be understood that the foregoing terminal device, network device, communication device, communication system, storage medium, program product, computer program, chip, or chip system may all be configured to perform the methods provided in the embodiments of the present disclosure. Therefore, for the beneficial effects that can be achieved thereby, reference may be made to the beneficial effects in the corresponding methods, and details are not described herein again.

The embodiments of the present disclosure provide an information transmission method, a device, and a storage medium. In some embodiments, the terms "information transmission method", "information processing method", "communication method", and the like may be interchangeable with each other; the terms "information transmission apparatus", "information processing apparatus", "communication apparatus", "communication device", and the like may be interchangeable with each other; and the terms "information processing system", "communication system", and the like may be interchangeable with each other.

The embodiments of the present disclosure are not exhaustive and are merely illustrative of some embodiments, and do not constitute a specific limitation on the protection scope of the present disclosure. Where no contradiction arises, each step in a certain embodiment may be implemented as an independent embodiment, and the steps may be combined arbitrarily. For example, a solution obtained after some steps are removed from a certain embodiment may also be implemented as an independent embodiment, and the order of the steps in a certain embodiment may be exchanged arbitrarily. In addition, the optional implementations in a certain embodiment may be combined arbitrarily. Furthermore, the embodiments may be combined arbitrarily with one another. For example, some or all of the steps of different embodiments may be combined arbitrarily, and a certain embodiment may be combined arbitrarily with the optional implementations of other embodiments.

In the embodiments of the present disclosure, unless otherwise specified and unless a logical conflict arises, the terms and/or descriptions in the embodiments are consistent and may be cited by one another, and technical features in different embodiments may be combined according to their inherent logical relationships to form new embodiments.

The terms used in the embodiments of the present disclosure are merely for the purpose of describing particular embodiments, and are not intended as a limitation on the present disclosure.

In the embodiments of the present disclosure, unless otherwise specified, an element expressed in a singular form, such as "one", "a", "the", "the above-mentioned", "the said", "the foregoing", or "this", may represent "one and only one", and may also represent "one or more", "at least one", or the like. For example, where an article such as "a", "an", or "the" in English is used in a translation, a noun following the article may be understood as being in a singular expression form, and may also be understood as being in a plural expression form.

In some embodiments, "a plurality of" may refer to two or more.

In some embodiments, the terms "at least one of" (at least one item, at least one), "one or more" (one or more items), "a plurality of", "multiple", and the like may be interchangeable with each other.

In some embodiments, expressions such as "at least one of A and B", "A and/or B", "A in one case, and B in another case", and "A in response to one case, and B in response to another case" may, depending on the circumstances, encompass the following technical solutions: in some embodiments, A (A is performed independently of B); in some embodiments, B (B is performed independently of A); in some embodiments, either A or B is selected for performance (A and B are selectively performed); and in some embodiments, both A and B are performed. The same applies when there are additional alternatives, such as A, B, and C.

In some embodiments, an expression such as "A or B" may, depending on the circumstances, encompass the following technical solutions: in some embodiments, A (A is performed independently of B); in some embodiments, B (B is performed independently of A); and in some embodiments, either A or B is selected for performance (A and B are selectively performed). The same applies when there are additional alternatives, such as A, B, and C.

The prefixes such as "first" and "second" in the embodiments of the present disclosure are merely used to distinguish different described objects, and do not constitute a limitation on the position, order, priority, quantity, content, or the like of the described objects. For statements about the described objects, reference is made to the description in the context of the claims or the embodiments, and use of the prefixes should not be construed as imposing any additional limitation. For example, if a described object is a "field", the ordinal numbers preceding "field" in the "first field" and the "second field" do not limit the position or order between the "fields"; "first" and "second" do not limit whether the "fields" modified thereby are in the same message, nor do they limit the order of the "first field" and the "second field". For another example, if a described object is a "level", the ordinal numbers preceding "level" in the "first level" and the "second level" do not limit the priority between the "levels". For another example, the quantity of a described object is not limited by the ordinal number, and may be one or more; taking the "first apparatus" as an example, the quantity of the "apparatus" therein may be one or more. In addition, objects modified by different prefixes may be the same or different. For example, if a described object is an "apparatus", the "first apparatus" and the "second apparatus" may be the same apparatus or different apparatuses, and the types thereof may be the same or different. For another example, if a described object is "information", the "first information" and the "second information" may be the same information or different information, and the contents thereof may be the same or different.

In some embodiments, "including A", "containing A", "used to indicate A", and "carrying A" may be interpreted as directly carrying A, and may also be interpreted as indirectly indicating A.

In some embodiments, the terms "in response to ...", "in response to determining ...", "under the circumstance that ...", "at the time when ...", "when ...", "if ...", and "in a case where ..." may be interchangeable with each other.

In some embodiments, the terms "greater than", "greater than or equal to", "not less than", "more than", "more than or equal to", "not fewer than", "higher than", "higher than or equal to", "not lower than", "or more", and the like may be interchangeable with each other; and the terms "less than", "less than or equal to", "not greater than", "fewer than", "fewer than or equal to", "not more than", "lower than", "lower than or equal to", "not higher than", "or less", and the like may be interchangeable with each other.

In some embodiments, an apparatus or the like may be interpreted as being physical, and may also be interpreted as being virtual, and the name thereof is not limited to the name described in the embodiments. The terms "apparatus", "equipment", "device", "circuit", "network element", "node", "function", "unit", "section", "system", "network", "chip", "chip system", "entity", "subject", and the like may be interchangeable with each other.

In some embodiments, a "network" may be interpreted as an apparatus contained in the network (for example, a network device, an access network device, or a core network device).

In some embodiments, the network device may include at least one of an access network device and a core network device.

In some embodiments, the terms "access network device (AN Device)", "radio access network device (RAN Device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", and the like may be interchangeable with each other.

In some embodiments, the terms "terminal", "terminal device", "terminal-side device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, and the like may be interchangeable with each other.

In some embodiments, an access network device, a core network device, or a network device may be replaced with a terminal device. For example, the embodiments of the present disclosure may also be applied to a structure in which communication between an access network device, a core network device, or a network device and a terminal device is replaced with communication between a plurality of terminal devices (for example, device-to-device (D2D) communication or vehicle-to-everything (V2X) communication). In this case, a structure may also be adopted in which the terminal device has all or part of the functions of the access network device. In addition, the terms "uplink", "downlink", and the like may also be replaced with terms corresponding to the communication between terminal devices (for example, "sidelink"). For example, an uplink channel, a downlink channel, and the like may be replaced with a sidelink channel or a direct link channel, and an uplink, a downlink, and the like may be replaced with a sidelink or a direct link.

In some embodiments, a terminal device may be replaced with an access network device, a core network device, or a network device. In this case, a structure may also be adopted in which the access network device, the core network device, or the network device has all or part of the functions of the terminal device.

In some embodiments, data, information, and the like may be acquired in compliance with the laws and regulations of the country in which the acquisition occurs.

In some embodiments, data, information, and the like may be acquired after consent of a user is obtained.

In addition, each element, each row, or each column in a table in the embodiments of the present disclosure may be implemented as an independent embodiment, and a combination of any elements, any rows, or any columns may also be implemented as an independent embodiment.

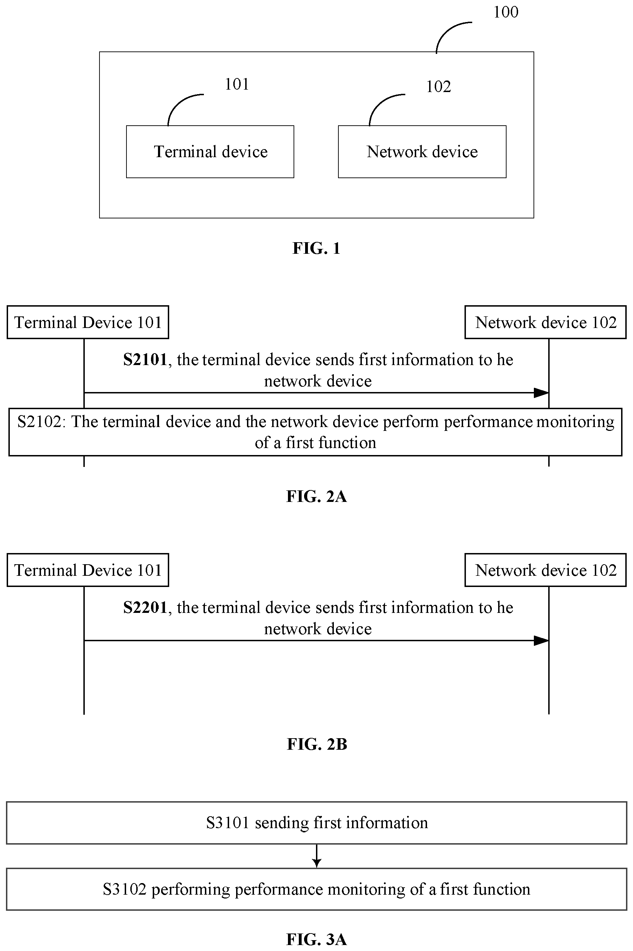

FIG. 1 is a schematic architecture diagram of a communication system according to an embodiment of the present disclosure. As shown in FIG. 1, the communication system 100 may include a terminal device 101 and a network device 102.

In some embodiments, the terminal device 101 may include at least one of a mobile phone, a wearable device, an Internet of Things device, a vehicle having a communication function, an intelligent vehicle, an on-board terminal, a tablet computer (Pad), a computer with a wireless transceiver function, a road side unit (RSU), a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the network device 102 may include at least one of an access network device or a core network device.

In some embodiments, the access network device may be a node or a device that connects a terminal device to a wireless network. The access network device may include at least one of an evolved NodeB (eNB) in a 5G communication system, a next generation eNB (ng-eNB), a next generation NodeB (gNB), a NodeB (NB), a home NodeB (HNB), a home evolved NodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in another communication system, and an access node in a Wi-Fi system, but is not limited thereto.

In some embodiments, the technical solutions of the present disclosure may be applicable to an Open RAN architecture. In this case, the interfaces between access network devices or within an access network device involved in the embodiments of the present disclosure may serve as internal interfaces of the Open RAN, and the procedures and information interactions between these internal interfaces may be implemented by software or programs.

In some embodiments, the access network device may be composed of a central unit (CU) and a distributed unit (DU). The CU may also be referred to as a control unit. With the CU-DU structure, the protocol layers of the access network device can be split, functions of some protocol layers are placed under the centralized control of the CU, functions of the remaining part or all of the protocol layers are distributed in the DU, and the DU is centrally controlled by the CU, but this is not limited thereto.

In some embodiments, the core network device may be one device, or may be a plurality of devices or a device group. The core network may include at least one of an evolved packet core (EPC), a 5G core network (5GCN), a 6G core network (6GCN), and a next generation core (NGC).

It may be understood that the communication system described in the embodiments of the present disclosure is intended to describe the technical solutions of the embodiments of the present disclosure more clearly, and does not constitute a limitation on the technical solutions provided in the embodiments of the present disclosure. A person of ordinary skill in the art may know that, with the evolution of system architectures and the emergence of new service scenarios, the technical solutions provided in the embodiments of the present disclosure are equally applicable to similar technical problems.

The following embodiments of the present disclosure may be applied to the communication system 100 shown in FIG. 1 or to some of the entities therein, but are not limited thereto. The entities shown in FIG. 1 are examples. The communication system may include all or some of the entities shown in FIG. 1, and may also include entities other than those shown in FIG. 1. The quantity and form of each entity are arbitrary. Each entity may be physical or virtual. The connection relationships between the entities are examples. The entities may be connected or unconnected, and any type of connection may be used, including a direct or indirect connection and a wired or wireless connection.

The embodiments of the present disclosure may be applied to Long Term Evolution (LTE), LTE-Advanced (LTE-A), LTE-Beyond (LTE-B), SUPER 3G, IMT-Advanced, the fourth generation mobile communication system (4G), the fifth generation mobile communication system (5G), 5G New Radio (NR), Evolved Universal Terrestrial Radio Access (E-UTRA), Future Radio Access (FRA), New-Radio Access Technology (RAT), New Radio (NR), New Radio Access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a Public Land Mobile Network (PLMN) network, a Device-to-Device (D2D) system, a Machine to Machine (M2M) system, an Internet of Things (IoT) system, Vehicle-to-Everything (V2X), a system using another communication method, a next generation system extended on the basis thereof, and the like. In addition, a plurality of systems may also be applied in combination (for example, a combination of LTE or LTE-A with 5G).

In some embodiments of the present disclosure, the foregoing communication system may support beam-based transmission and reception. The beam-based transmission and reception can better align a useful signal with a corresponding terminal device, and can also avoid leakage of signal energy that causes interference to other terminal devices, and can improve a signal to interference plus noise ratio and improve coverage performance of a wireless communication system.

By way of example, in a communication system, for example in NR communication, for the FR2 (frequency range 2) communication frequency band, since a highfrequency channel attenuates relatively fast, beam-based transmission and reception may be used in order to ensure a coverage range.

In some embodiments, the network device may configure a reference signal resource set used for beam measurement, and the terminal device may measure the reference signal resources in the reference signal resource set, and report identifiers (IDs) of X reference signal resources having relatively strong signal quality in the measurement results, as well as a Layer 1 reference signal received power (L1-RSRP) and/or a Layer 1 signal to interference plus noise ratio (L1-SINR) of each of the X reference signal resources. The reference signal resource set configured by the network device includes X reference signal resources, and each reference signal resource corresponds to a different transmit beam of the network device. For each reference signal resource, the terminal device needs to measure the reference signal resource by using all receive beams, determine a beam measurement quality corresponding to each receive beam, and determine a strongest beam measurement quality from a plurality of beam measurement qualities. In the foregoing measurement process, if the quantity of transmit beams of the network device is M and the quantity of receive beams of the terminal device is N, the quantity of beam pairs that the terminal device needs to measure is M*N.

In some embodiments, the terms "beam", "beam pair", "beam width", "beam angle", "antenna", "antenna element", "antenna port", "antenna port group", "panel", "layer", "the number of layers", "rank", "resource", "resource set", "resource group", "Quasi-Colocation (QCL) Type D", "spatial setting", "spatial filter", "spatial relation info", "spatial RX parameters", "spatial Tx parameter", "Transmission Configuration Indication (TCI) state", and the like may be interchangeable with each other.

In some embodiments of the present disclosure, the foregoing communication system may support a first function, and the first function may be used for performing beam prediction.

In some embodiments, the first function may include an AI function (functionality) and/or an AI model (model).

In some embodiments, one of the foregoing AI functions may correspond to one or more AI models. For example, an AI function may be a function or a module implemented by one or more AI models.

By way of example, the terminal device may support a certain AI function. Under the AI function, the terminal device may support one or more AI models, that is, the AI function may correspond to (or include) one or more AI models, and the AI function can be implemented by some or all of the one or more AI models.

In one implementation, the terminal device may report to the network device that a certain AI function is supported, but the terminal device does not need to report to the network device the one or more AI models corresponding to the AI function. When the AI function is activated (for example, activation is indicated by the network device, or activation is autonomously determined by the terminal device), the terminal device may autonomously activate one or more AI models included in the AI function (some of them may be activated, or all of them may be activated), so as to implement the AI function.

In one implementation, the terminal device may report to the network device that a certain AI function is supported, and report the one or more AI models corresponding to the AI function. In this way, operations such as activation or deactivation of the AI function and/or the AI model may be performed by the network device or the terminal device. For example, the network device may determine an AI function and/or an AI model to be activated, and indicate this to the terminal device, and the terminal device activates the corresponding AI function and/or AI model according to the indication of the network device. For another example, the network device may determine only the AI function to be activated and notify the terminal device, and the terminal device autonomously activates one or more AI models included in the AI function (some of them may be activated, or all of them may be activated), so as to implement the AI function.

In some other embodiments, one of the foregoing AI models may also correspond to one or more AI functions. For example, one AI model may implement one or more AI functions.

By way of example, the terminal device may report to the network device that a certain AI model is supported, the AI model may correspond to one or more AI functions, and the network device may instruct the terminal device to activate or deactivate the AI model.

By way of example, the terminal device may support a certain AI model, and based on the AI model, the terminal device may support the implementation of one or more AI functions.

In one implementation, the terminal device may report to the network device that a certain AI model is supported, but the terminal device does not need to report to the network device the one or more AI functions corresponding to the AI model. When the AI model is activated (for example, activation is indicated by the network device, or activation is autonomously determined by the terminal device), the terminal device may autonomously implement one or more AI functions supported by the AI model.

In one implementation, the terminal device may report to the network device that a certain AI model is supported, and report the one or more AI functions corresponding to the AI model. In this way, operations such as activation or deactivation of the AI model and/or the AI function may be performed by the network device or the terminal device. For example, the network device may determine an AI model and/or an AI function to be activated, and indicate this to the terminal device, and the terminal device activates the corresponding AI model and/or AI function according to the indication of the network device. For another example, the network device may determine only the AI model to be activated and notify the terminal device, and the terminal device autonomously activates one or more AI functions included in the AI model (some of them may be activated, or all of them may be activated).

In still other embodiments, the foregoing AI functions and AI models may be in one-to-one correspondence.

In some embodiments, the first function may be deployed on the terminal device and/or the network device. For example, the first function may be entirely deployed on the terminal device; for another example, the first function may be entirely deployed on the network device; for still another example, the first function may be deployed on both the terminal device and the network device, and the terminal device and the network device may each deploy part or all of the first function.

In some embodiments, the name of the first function is not limited, and may be, for example, an "AI function", an "AI model", an "AI module", a "prediction function", a "prediction model", or a "prediction module".

In some embodiments, the terminal device and/or the network device may perform beam prediction using the foregoing first function. For example, absent use of the first function, the terminal device may need to measure M*N beam pairs in total, where M is the quantity of transmit beams of the base station and N is the quantity of receive beams of the terminal device. By using the first function, the quantity of beam pairs measured by the terminal device can be reduced, while beam information (for example, beam quality and optimal-beam information) for the M*N beam pairs can still be predicted and output.

For example, for spatial domain beam prediction, the terminal device may measure only a part of beam pairs among a plurality of beam pairs. For example, the beam pairs measured by the terminal device may be 1/8, 1/4, or the like of the M*N beam pairs. The beam measurement qualities of the part of beam pairs obtained through the measurement are used as input values of the foregoing first function, and corresponding output values can be obtained through prediction by the foregoing first function. The output values may be beam information of the M*N beam pairs, such as a beam quality of at least one beam pair, and/or identifiers of the optimal K beam pairs. The output values may also be beam information related to the M base station transmit beams, such as a beam quality of at least one base station transmit beam, and/or identifiers of the optimal K base station transmit beams. The beam measurement quality may include the L1-RSRP and/or the L1-SINR. The foregoing beam pair identifier may be a TxRx beam ID, and the Tx beam ID may be a reference signal resource identifier.

Optionally, neither the input nor the output of the first function needs to take into account the beam quality or identifier of a beam pair, and only the beam quality or identifier of a downlink transmit beam may be taken into account. In other words, the first function may be an AI function or AI model based on downlink beams rather than beam pairs.

In some embodiments, the terminal device and/or the network device may perform beam prediction using the foregoing first function. For example, absent use of the first function, the terminal device may need to measure M transmit beams of the base station in total. By using the first function, the quantity of transmit beams measured by the terminal device can be reduced, while beam information (for example, beam quality and optimal-beam information) for the M transmit beams can still be predicted and output.

For example, for spatial domain beam prediction, the terminal device may measure only a part of transmit beams among a plurality of transmit beams of the base station. For example, the beams measured by the terminal device may be 1/8, 1/4, or the like of the M beams. The beam measurement qualities of the part of beams obtained through the measurement are used as input values of the foregoing first function, and corresponding output values can be obtained through prediction by the foregoing first function. The output values may be beam information of the M transmit beams, such as a beam quality of at least one beam, and/or identifiers of the optimal K beams. The beam measurement quality may include the L1-RSRP and/or the L1-SINR. The foregoing beam identifier may be a Tx beam ID, and the Tx beam ID may be a reference signal resource identifier.

For another example, for time domain beam prediction, the terminal device may measure beam qualities of beam pairs or transmit beams at historical times to obtain historical beam measurement qualities, use the historical beam measurement qualities as input values of the foregoing first function, and obtain corresponding output values through prediction by the foregoing first function. The output values may be beam information (for example, information such as beam quality and an optimal beam) of beam pairs or base station transmit beams at future times. The beam measurement quality may include the L1-RSRP and/or the L1-SINR. The optimal beam may include an optimal beam pair identifier, and the beam pair identifier may be a TxRx beam ID, in which Tx may be a reference signal resource identifier; the optimal beam may include an optimal beam identifier, and the beam identifier may be a reference signal resource identifier. The foregoing transmit beam may be transmitted by the base station to the terminal device.

In some embodiments, the beam sets of the terminal device may include a first beam set setB and a second beam set setA, in which:
the first beam set setB includes one or more first beams, and the first beams may be beams corresponding to the input values of the first function. For example, the terminal device can obtain beam measurement qualities by measuring the first beams in the first beam set setB.

The second beam set setA includes one or more second beams, and the second beams may be beams corresponding to the output values of the first function.

In some embodiments, for spatial domain beam prediction, the first function may predict measurement results of the second beams in the second beam set setA based on measurement results of the first beams in the first beam set setB. For example, the terminal device may obtain measurement information of setB through measurement, and input the L1-RSRP and/or the L1-SINR obtained through the measurement into the first function, and the first function can predict and output prediction information of setA. The measurement information may include the L1-RSRP and/or the L1-SINR of the first beams in setB, and may further include beam identifiers or beam pair identifiers of the first beams; and the prediction information may include the L1-RSRP and/or the L1-SINR of the second beams in setA, and may further include beam identifiers or beam pair identifiers of the second beams.

For spatial domain beam prediction, the relationship between the first beam set setB and the second beam set setA may include at least one of the following:
setB may be a subset of setA. For example, setA includes 32 reference signal resources (each reference signal resource corresponds to one beam direction), and setB includes N reference signal resources, where N may be less than 32; for example, N may be 16, 8, or 4. For another example, if beam pairs are taken into account, that is, the receive beams of the terminal device are taken into account, assuming that the network device has 32 transmit beams and the terminal device has 4 receive beams, then setA may include 32*4 reference signal resources (one reference signal resource corresponds to one beam pair), and setB may include N reference signal resources, where N is less than 32*4; for example, N may be 32, 16, or 8.

setB is different from setA, the beams corresponding to setB are wide beams, and the beams corresponding to setA are narrow beams. Optionally, the beam coverage ranges of setB and setA may be the same or different. By way of example, setA includes 32 reference signal resources, each corresponding to one beam direction, and the 32 reference signal resources cover a range of 120 degrees; setB includes N reference signal resources, for example N=8, which also cover a range of 120 degrees. Thus, the beam directions of the reference signal resources in setB cover those of the reference signal resources in setA. This may also be understood to mean that 32/N reference signal resources in setA have a QCL Type D relationship with the same reference signal resource in setB. Beam pairs may likewise be taken into account.

In some embodiments, if there is no need to monitor the performance of the first function (for example, because the first function has been trained in advance), the network device may periodically transmit the reference signals of the first beam set setB, with the transmission period being a first period. The terminal device may measure the L1-RSRPs of the reference signals in setB and input them into the first function, which may then output the L1-RSRPs of the beams or beam pairs in the second beam set setA, or the identifiers of the N strongest reference signal resources or beam pairs among the reference signals in the second beam set.

In some embodiments, if the performance of the first function needs to be monitored, then in addition to transmitting the reference signals of the first beam set setB, the network device may further periodically transmit the reference signals of the second beam set setA. The period for transmitting setA may be a second period, and the period for transmitting setB may be the first period. The second period may be greater than the first period; for example, it may or may not be a multiple of the first period. Optionally, the terminal device may measure only the reference signals in setB, input the measurement results into the first function to obtain predicted beam information, and report the predicted beam information to the network device, while also measuring the L1-RSRPs of all reference signals in setA, obtaining conventional beam information, and reporting the conventional beam information to the network device. Optionally, if setB is a subset of setA, the terminal device need only measure all beams or beam pairs in setA.

In some embodiments, for time domain beam prediction, the first function may predict measurement results of the second beams in the second beam set setA at future times based on measurement results of the first beams in the first beam set setB at historical times. For example, the terminal device may measure the L1-RSRPs and/or the L1-SINRs of the first beams in setB at historical times, and input the L1-RSRPs and/or the L1-SINRs obtained through the measurement into the first function, and the first function can predict and output the L1-RSRPs and/or the L1-SINRs of the second beams in setA at future times.

For time domain beam prediction, the relationship between the first beam set setB and the second beam set setA may include at least one of the following:
setB may be a subset of setA;
setB is different from setA, the beams corresponding to setB are wide beams, and the beams corresponding to setA are narrow beams;
setB is the same as setA.

In some embodiments, if the first function (for example, an AI function and/or an AI model) is relied upon, then the reference signals at future moments may not be transmitted, and the beam information is obtained based on the output of the AI model and reported to the network device.

In some embodiments, based on a conventional method, the reference signals at future moments also need to be transmitted, and the terminal device measures the reference signals at the future moments, obtains beam information, and reports it to the network device. Therefore, when performance monitoring is performed on the first function, time domain beam prediction is similar to spatial domain beam prediction, in that the network device may periodically transmit the transmit beams in setB and setA, and the terminal device may measure all the beams or beam pairs in setB and setA.

In some embodiments, a terminal device may support one or more first functions, and different terminal devices may support different first functions. Therefore, how the network device obtains information related to the first function supported by a terminal device is an issue that needs to be addressed.

FIG. 2A is a schematic interaction diagram of an information transmission method according to an embodiment of the present disclosure. The method may be performed by the foregoing communication system. As shown in FIG. 2A, the method may include:
Step S2101: A terminal device sends first information to a network device.

In some embodiments, the network device may receive the first information. For example, the network device may receive the first information sent by the terminal device.

In some embodiments, the first information may be information corresponding to a first function.

In some embodiments, the first function may be an AI function and/or an AI model that is supported by the terminal device and that is used for performing beam prediction.

In some embodiments, the first information may be used to report information related to the first function.

In some embodiments, the name of the first information is not limited, and may be, for example, "reporting information", "uplink information", "AI function information", or "AI model information".

In some embodiments, the first information may be carried in at least one of a radio resource control (RRC) message, a medium access control control element (MAC CE), uplink control information (UCI), and another message sent by the terminal device to the network device. Optionally, the first information may be carried in an RRC message.

In some embodiments, the first information is carried in a terminal capability report (UE capability report), that is, the first information may be reported based on a mechanism for reporting terminal capabilities.

In this way, the terminal device can report the information corresponding to the first function by means of the terminal capability report, thereby allowing the network device to select an appropriate function or model based on the information and requirements and improving the flexibility and reliability of function management.

In some embodiments, the first function may include an AI function and/or an AI model.

In some embodiments, one of the foregoing AI functions may correspond to one or more AI models. For example, an AI function may be a function or a module implemented by one or more AI models.

In some other embodiments, one of the foregoing AI models may also correspond to one or more AI functions. For example, one AI model may implement one or more AI functions.

In still other embodiments, the foregoing AI functions and AI models may be in one-to-one correspondence.

In some embodiments, the first function may be deployed on the terminal device and/or the network device. For example, the first function may be entirely deployed on the terminal device; for another example, the first function may be entirely deployed on the network device; for still another example, the first function may be deployed on both the terminal device and the network device, and the terminal device and the network device may each deploy part or all of the first function.

In some embodiments, the name of the first function is not limited, and may be, for example, an "AI function", an "AI model", an "AI module", a "prediction function", a "prediction model", or a "prediction module".

In some embodiments, the foregoing first information may be sent by the terminal device during or after a first function identification process, and the first function identification may include AI function identification and/or AI model identification.

In some embodiments of the present disclosure, the first information may include at least one of:
second information, in which the second information includes information for monitoring a performance of the first function supported by the terminal device;
third information, in which the third information includes content information output by the first function supported by the terminal device;
fourth information, in which the fourth information includes a function identifier of the first function supported by the terminal device.

For example, the first information may include only the second information. For another example, the first information may include only the third information. For still another example, the first information may include the second information and the fourth information. For still another example, the first information may include the third information and the fourth information.

Optionally, the foregoing second information, third information, and fourth information may be carried in the same message, and may also be carried in different messages, without limitation in the embodiments of the present disclosure.

In some embodiments, instances of information included in the first information may include mandatory information and optional information.

For example, the second information may include multiple instances of information, including mandatory information and optional information; at least some of the information may be mandatory to report, and some may be optional to report.

For another example, the third information may include multiple instances of information, including mandatory information and optional information; at least some of the information may be mandatory to report, and some may be optional to report.

For still another example, the fourth information may include multiple instances of information, including mandatory information and optional information; at least some of the information may be mandatory to report, and some may be optional to report.

In some embodiments, the fourth information may further include other information of the first function. By way of example, the fourth information may include at least one of:
a function identifier, in which the function identifier is used to determine the first function supported by the terminal device; by way of example, the function identifier includes an AI function identifier (Functionality ID) and/or an AI model identifier (Model ID);
an application instance, in which the application instance is an instance in which the first function is applied to perform beam prediction;
beam-related information, in which the beam-related information is used to determine a first beam (or beam pair) and/or a second beam (or beam pair), the first beam (or beam pair) is a beam (or beam pair) corresponding to an input value of the first function, and the second beam (or beam pair) is a beam (or beam pair) corresponding to an output value of the first function;
network coverage information, in which the network coverage information is used to indicate information related to the coverage of the network device, for example, a deployment type of the network device (such as an urban macro base station, an urban micro base station, an indoor base station, a dense urban area, a rural area, or a hotspot), and/or an inter-site distance of the network device (such as 100 m, 200 m, 500 m, or 1000 m);
terminal distribution information, in which the terminal distribution information is used to indicate the distribution of a plurality of terminal devices within the coverage range of the network device.

In some embodiments, the foregoing application instance may include any one of:
a spatial domain beam prediction instance;
a time domain beam prediction instance;
a spatial domain beam prediction instance and a time domain beam prediction instance.

In some embodiments, the foregoing beam-related information may include at least one of:
a first reference signal resource set, in which the reference signal resources in the first reference signal resource set correspond to first beams (or beam pairs), and the first beams (or beam pairs) are beams (or beam pairs) corresponding to the input values of the first function; optionally, each reference signal resource in the first reference signal resource set may correspond to one reference signal resource identifier; optionally, a reference signal resource may correspond to a beam (or beam pair), and the first reference signal resource set may also be referred to as a first set, a first beam set, a first beam pair set, or setB;
a second reference signal resource set, in which the reference signal resources of the second reference signal resource set correspond to second beams (or beam pairs), and the second beams (or beam pairs) are beams (or beam pairs) corresponding to the output values of the first function; optionally, each reference signal resource in the second reference signal resource set may correspond to one reference signal resource identifier; optionally, the second reference signal resource set may also be referred to as a second set, a second beam set, a second beam pair set, or setA;
a set relationship, in which the set relationship includes a relationship between the first reference signal resource set and the second reference signal resource set;
the quantity of beams (or beam pairs) included in the first reference signal resource set, or the range in which the quantity lies;
the quantity of beams (or beam pairs) included in the second reference signal resource set, or the range in which the quantity lies;
positions in the second reference signal resource set of beams (or beam pairs) corresponding to beams (or beam pairs) in the first reference signal resource set;
the ratio of the quantity of beams (beam pairs) in the first reference signal resource set to the quantity of beams (beam pairs) in the second reference signal resource set;
the mapping relationship between the beams (beam pairs) in the first reference signal resource set and the beams (beam pairs) in the second reference signal resource set;
time information corresponding to the first reference signal resource set, in which the time information may indicate a quantity of time instances, for example, a quantity of historical measurement time instances;
time information corresponding to the second reference signal resource set, in which the time information may indicate a quantity of time instances, for example, a quantity of predicted future time instances;
a time pattern, in which the time pattern indicates a temporal pattern between times corresponding to the first reference signal resource set and times corresponding to the second reference signal resource set.

In some embodiments, the foregoing set relationship may include any one of:
the first reference signal resource set is a subset of the second reference signal resource set; by way of example, the second reference signal resource set may include M reference signal resources (each reference signal resource corresponds to one beam direction), for example M=32, and the first reference signal resource set may include N reference signal resources, where N is less than M, for example N=8; both M and N are positive integers;
the first reference signal resource set is different from the second reference signal resource set, the beams corresponding to the first reference signal resource set are wide beams, and the beams corresponding to the second reference signal resource set are narrow beams; optionally, the beam coverage ranges corresponding to the first reference signal resource set and the second reference signal resource set may be the same or different;
the first reference signal resource set is the same as the second reference signal resource set (in the time domain beam prediction instance, this set relationship may take effect).
In some embodiments of the present disclosure, the foregoing second information may include at least one of:
   a performance monitoring type, in which the performance monitoring type may be a type of performance monitoring supported by the terminal device;
   a performance metric type, in which the performance metric type may be used to indicate a performance metric supported by the terminal device;
   an event type, in which the event type may be used to indicate a type of an event that triggers monitoring the performance.

In this way, the information related to monitoring the performance of the first function supported by the terminal device can be reported by means of the second information.

In some embodiments, the foregoing second information may include a performance monitoring type, and the performance monitoring type may include any one of:
a first type of performance monitoring (Type 1 performance monitoring); optionally, the first type of performance monitoring may be performance monitoring controlled by the network device;
a second type of performance monitoring (Type 2 performance monitoring); optionally, the second type of performance monitoring may be performance monitoring controlled by the terminal device; and
a third type of performance monitoring; optionally, the third type of performance monitoring is performance monitoring assisted by the terminal device.

In this way, the terminal device can report the supported performance monitoring type to the network device through the second information, and the network device can configure a performance monitoring type for the terminal device based on the second information, so that the flexibility and reliability of the performance monitoring can be improved.

In some embodiments of the present disclosure, for different performance monitoring types, the manners in which the terminal device and the network device monitor the performance of the first function may be different.

In some embodiments, based on the first type of performance monitoring, the terminal device and/or the network device may perform at least one of the following steps:
the network device may send, to the terminal device, a configuration (or signaling) instructing the terminal device to perform measurement and/or reporting;
the terminal device may perform different optional operations: Option 1, the terminal device may send a report to the network device, for example, by sending measured beam information and/or predicted beam information, in which the measured beam information includes beam information obtained by the terminal device through measurement (for example, the measured RSRPs of setA), and the predicted beam information includes beam information predicted and obtained by the terminal device by using the first function (for example, the predicted RSRPs of setA), and the measured beam information and/or the predicted beam information may be used by the network device to calculate a performance metric; Option 2, the terminal device may calculate a performance metric based on the measured beam information and the predicted beam information, and send performance metric information and/or event information triggered based on the performance metric information to the network device;
the network device may instruct the terminal device to perform a first operation on the first function; optionally, the first operation may be referred to as a lifecycle management (LCM) operation and may include any one of selection, activation, deactivation, switching, or fallback, for example, selecting, activating, deactivating, switching, or performing fallback for the first function (that is, switching the first function to a state at an earlier time point, such as restoring the first function to an initial state).

In some other embodiments, based on the second type of performance monitoring, the terminal device and/or the network device may perform at least one of the following steps:
the terminal device sends a performance monitoring request (or indication or report) to the network device; optionally, in some cases the performance monitoring request may not be required;
the network device may send, to the terminal device, a configuration (or signaling) instructing the terminal device to perform measurement and/or reporting;
the terminal device may calculate a performance metric based on the predicted beam information and the measured beam information, and send performance metric information and/or event information triggered based on the performance metric information to the network device;
if the first function is deployed on the terminal device, then the terminal device may determine to perform a first operation on the first function; optionally, the first operation may include any one of: selection, activation, deactivation, switching, or fallback.

In still other embodiments, based on the third type of performance monitoring, the terminal device and/or the network device may perform at least one of the following steps:
the network device may send, to the terminal device, a configuration (or signaling) instructing the terminal device to perform measurement and/or reporting;
the terminal device may calculate a performance metric based on the predicted beam information and the measured beam information, and send performance metric information and/or event information triggered based on the performance metric information to the network device;
the network device may instruct the terminal device to perform a first operation on the first function; optionally, the first operation may include any one of: selection, activation, deactivation, switching, or fallback.

In some embodiments, the third type of performance monitoring may be a subtype of the first type of performance monitoring.

In some embodiments, the foregoing second information may include a performance metric type, and the performance metric type may be used to indicate a performance metric supported by the terminal device.

In some embodiments, the performance metric may include at least one of:
a beam prediction accuracy, in which the beam prediction accuracy is a probability that a predicted optimal reference signal resource includes an actual optimal reference signal resource, the predicted optimal reference signal resource is an optimal reference signal resource obtained through prediction by the first function, the actual optimal reference signal resource is an optimal reference signal resource obtained through actual measurement by the terminal device, the optimal reference signal resource includes top N reference signal resources having strongest signal strengths in a predicted second reference signal resource set, and N is a positive integer, for example 1, 2, 4, or 8; optionally, having an optimal signal strength may mean having the largest L1-RSRP or L1-SINR; optionally, the beam prediction accuracy may also be referred to as the beam prediction accuracy of the TOP N beams (or beam pairs) (beam prediction accuracy of top N beam(pair)); optionally, the reference signal resources in this embodiment may correspond to beams (or beam pairs); for example, the predicted optimal reference signal resource corresponds to a predicted optimal beam (or beam pair), the actual optimal reference signal resource may correspond to an actual optimal beam (or beam pair), and a reference signal resource identifier may correspond to a beam identifier;
a first signal strength difference, in which the first signal strength difference is a difference between a first signal strength and a second signal strength, the first signal strength is an actual signal strength of the predicted optimal reference signal resource, and the second signal strength is an actual signal strength of the actual optimal reference signal resource; optionally, the first signal strength difference may also be referred to as the L1-RSRP difference;
a second signal strength difference, in which the second signal strength difference is a difference between a first signal strength and a third signal strength, the first signal strength is an actual signal strength of the predicted optimal reference signal resource, and the third signal strength is a predicted signal strength of the predicted optimal reference signal resource; optionally, the second signal strength difference may also be referred to as the predicted L1-RSRP difference;
a third signal strength difference, in which the third signal strength difference is a difference between a second signal strength and a fourth signal strength, the second signal strength is an actual signal strength of the actual optimal reference signal resource, and the fourth signal strength is a predicted signal strength of the actual optimal reference signal resource;
a first signal strength prediction accuracy metric, in which the first signal strength prediction accuracy metric is a probability that a first signal strength difference falls within a first difference range, or an average value of the first signal strength difference, or a value of the first signal strength difference corresponding to a first distribution proportion on a cumulative distribution function (CDF) of the first signal strength difference, and the first distribution proportion is greater than 0 and less than 1, for example 5%, 10%, 90%, or 95%; optionally, the first difference range may be a range below a first threshold, above the first threshold, or within a specified interval; for example, the first difference range may be a range of less than 1 dB; optionally, the first signal strength prediction accuracy metric may also be referred to as the beam prediction accuracy of the L1-RSRP within 1 dB (beam prediction accuracy);
a second signal strength prediction accuracy metric, in which the second signal strength prediction accuracy metric is a probability that a second signal strength difference falls within a first difference range, or an average value of the second signal strength difference, or a value of a cumulative distribution function of the second signal strength difference at a first distribution proportion;
a third signal strength prediction accuracy metric, in which the third signal strength prediction accuracy metric is a probability that a third signal strength difference falls within a first difference range, or an average value of the third signal strength difference, or a value of a cumulative distribution function of the third signal strength difference at a first distribution proportion;
a throughput difference, in which the throughput difference is a difference between a first throughput and a second throughput, the first throughput is a throughput calculated based on a first SINR, the second throughput is a throughput calculated based on a second SINR, the first SINR is an actual SINR of the predicted optimal reference signal resource, and the second SINR is an actual SINR of the actual optimal reference signal resource; optionally, a channel capacity may be calculated from the SINR based on the Shannon capacity formula, and the difference between the channel capacities is the throughput difference;
a throughput prediction accuracy metric, in which the throughput prediction accuracy metric is a probability that the throughput difference falls within a second difference range, or an average value of the throughput difference, or a value of a cumulative distribution function of the throughput difference at a second distribution proportion, and the second distribution proportion is greater than 0 and less than 1; optionally, the throughput prediction accuracy metric may also be referred to as the average UE throughput difference;
a reference signal overhead, in which the reference signal overhead is used to indicate a quantity of reference signal resources required by the first function; optionally, the factors influencing the reference signal overhead may include the size of the first reference signal resource set corresponding to the model input, and the number of historical measurement time instances in the case of time domain prediction;
an uplink resource overhead, in which the uplink resource overhead is used to indicate a quantity of uplink resources occupied by information that needs to be reported to the network device for the first function to perform prediction and/or for monitoring the performance; optionally, the uplink resources may include uplink control information resources and/or uplink data resources; optionally, if the first function is deployed on the network device, then all the measurement results of the first reference signal resource set may be reported to the network device, and the uplink resource overhead may be the uplink resources (for example, uplink control information resources) required for reporting the measurement results;
a prediction latency, in which the prediction latency is a duration taken by the first function to perform beam prediction; optionally, the unit of the prediction latency may be milliseconds or microseconds;
input data distribution information, in which the input data distribution information is distribution information of input data of the first function; optionally, the input data distribution information may include values of the input data corresponding to a third distribution proportion (for example, 5%, 50%, or 95%) on a cumulative distribution function of the input data (for example, L1-RSRPs obtained through measurement);
output data distribution information, in which the output data distribution information is distribution information of output data of the first function; optionally, the output data distribution information may include values of the output data corresponding to a fourth distribution proportion (for example, 5%, 50%, or 95%) on a cumulative distribution function of the output data (for example, L1-RSRPs obtained through prediction); or
a model complexity, in which the model complexity may include at least one of a model size and a model computational load, and the model computational load may include floating-point operations (FLOPs) of the model and/or another metric characterizing the computational load; optionally, the model complexity may also be referred to as complexity, function complexity, or the like.

In some embodiments, the foregoing signal strength differences or throughput difference may each be an absolute value, without distinguishing between positive and negative, in which the signal strength differences include the foregoing first signal strength difference, second signal strength difference, or third signal strength difference.

In some embodiments, the foregoing performance metric may represent the accuracy of beam information output after multiple inferences by the first function and may be, for example, a probability or ratio. Taking beam prediction accuracy as an example, a prediction may be considered accurate when the identifiers of the N optimal reference signal resources predicted by the first function include the identifier of the actual optimal reference signal resource. The reference signal resource identifier may be a synchronization signal block (SSB) identifier, a channel state information reference signal (CSI-RS) identifier, or a sounding reference signal (SRS) identifier, where N is a positive integer, such as 1 or an integer greater than 1. Optionally, the probability corresponding to beam prediction accuracy may be a ratio of the number of predictions in which the predicted optimal reference signal resource includes the actual optimal reference signal resource to the total number of predictions. For example, if 100 predictions are made and the predicted optimal reference signal resource includes the actual optimal reference signal resource in 90 cases but not in 10 cases, the probability, and thus the beam prediction accuracy, is 90%.

In this way, the terminal device can report the supported performance metric type to the network device through the second information, and the network device can configure the performance metric to be reported by the terminal device based on the second information, so that the flexibility and reliability of the performance monitoring can be improved.

In some embodiments, the foregoing second information may include an event type, and the event type may be used to indicate a type of event supported by the terminal device and that triggers monitoring the performance.

In some embodiments, the event type includes at least one of:
a first type of event, in which the first type of event is used to indicate that a performance metric of an activated first function is worse than a first threshold, and the first threshold may be a configuration parameter of the first type of event;
a second type of event, in which the second type of event is used to indicate that a performance metric of a deactivated first function is better than a second threshold, and the second threshold may be a configuration parameter of the second type of event;
a third type of event, in which the third type of event is used to indicate that a performance metric of an activated first function is worse than a first threshold and that a performance metric of a deactivated first function is better than a second threshold, and the first threshold and the second threshold may be configuration parameters of the third type of event; optionally, the first threshold may be worse than the second threshold; or
a fourth type of event, in which the fourth type of event is used to indicate that a first difference is better than a fourth threshold, the first difference is a difference by which a second performance metric is better than a first performance metric, the first performance metric is a performance metric of an activated first function, the second performance metric is a performance metric of a deactivated first function, and the fourth threshold may be a configuration parameter of the fourth type of event.

Optionally, the foregoing "worse than" may be "less than" and may also be "greater than"; depending on the performance metric, the meaning of "worse than" may be different.

Optionally, the foregoing "better than" may be "greater than" and may also be "less than"; depending on the performance metric, the meaning of "better than" may also be different.

In one implementation, the foregoing "better than" is "greater than", and the foregoing "worse than" is "less than". For example, if the performance metric is the beam prediction accuracy, then "better than" is "greater than" and "worse than" is "less than", that is, the larger the value of the beam prediction accuracy (the closer it is to 100%), the better the performance of the first function.

In another implementation, the foregoing "better than" is "less than", and the foregoing "worse than" is "greater than". For example, if the performance metric is a signal strength difference or the throughput difference, then "better than" is "less than" and "worse than" is "greater than", that is, the smaller the signal strength difference or the smaller the throughput difference (the closer it is to 0), the better the performance of the first function.

Optionally, for different performance metrics, the triggering conditions of the foregoing events may be different.

In this way, the terminal device can report the supported event type to the network device through the second information, and the network device can configure an event that triggers reporting by the terminal device based on the second information, so that the flexibility and reliability of the performance monitoring can be improved.

In some embodiments of the present disclosure, the foregoing third information may include at least one of:
a reference signal resource identifier; optionally, the reference signal resource identifier may be a beam identifier;
a signal strength; optionally, there may be one or more signal strengths, one signal strength may be a signal strength of one reference signal resource, and the signal strength may be an L1-RSRP or an L1-SINR; or
a confidence corresponding to a signal strength.

In some embodiments, the confidence may be used to indicate whether the signal strength is obtained through actual measurement or through prediction.

In some embodiments, the signal strength is obtained through prediction, and the confidence may be used to indicate a prediction accuracy corresponding to the signal strength. Optionally, when the signal strength is obtained through prediction, the confidence may be used to indicate the prediction accuracy corresponding to the signal strength. Optionally, the prediction accuracy may include a prediction accuracy, for example 70%, 80%, or 90%.

In one implementation, the third information may include at least one reference signal resource identifier, a signal strength corresponding to each reference signal resource identifier, and a confidence corresponding to each signal strength.

In another implementation, the third information may include at least one reference signal resource identifier and a signal strength corresponding to each reference signal resource identifier.

In still another implementation, the third information may include at least one signal strength, and the signal strengths may indicate the signal strengths of the corresponding reference signal resources in a specific order. For example, the third information contains 32 signal strengths, and each signal strength indicates, in order, the signal strengths of the first through thirty-second reference signal resources. The specific order may be a preset order, or an order configured by the network device.

In yet another implementation, the third information may include a signal strength corresponding to at least one reference signal resource and a confidence corresponding to each signal strength.

Step S2102: The terminal device and the network device monitor the performance of the first function.

In some embodiments, the terminal device and the network device may perform a first operation on the first function based on the result of the performance monitoring.

In some embodiments, the first operation may include any one of selection, activation, deactivation, switching, or fallback. For example, the first operation may include selecting, activating, deactivating, switching, or performing fallback for the first function (that is, switching the first function to a state at an earlier time point, such as restoring the first function to an initial state).

In some embodiments, the first function is deployed on the terminal device, and the terminal device may autonomously perform a first operation on the first function; optionally, the terminal device may send notification information corresponding to the first operation to the network device before, after, or concurrently with performance of the first operation.

In some other embodiments, the first function is deployed on the terminal device and/or the network device, and the terminal device may perform a first operation on the first function according to an indication of the network device; optionally, the terminal device may notify the network device of the execution result of the first operation.

In some embodiments, the order of the foregoing step S2101 and step S2102 may be exchanged, or they may be performed simultaneously.

In some embodiments, the foregoing step S2101 and step S2102 are both optional steps.

In some embodiments, reference may be made to other optional implementations described before or after the description corresponding to FIG. 2A.

Optionally, for different performance monitoring types, the specific implementations of step S2102 may be different.

In some embodiments of the present disclosure, the performance monitoring type is the first type of performance monitoring, and step S2102 may include at least one of the following sub-steps.

S210211: The network device sends fifth information to the terminal device.

In some embodiments, the terminal device may receive the fifth information sent by the network device.

In some embodiments, the fifth information may be used to instruct the terminal device to perform measurement and/or reporting.

In some embodiments, the fifth information may be used to instruct the terminal device to monitor the performance of the first function.

In some embodiments, the fifth information may be a configuration or signaling instructing the terminal device to perform measurement and/or reporting.

In some embodiments, the name of the fifth information is not limited, and may be, for example, "configuration information", "configuration signaling", "measurement configuration", "measurement report configuration", or "performance monitoring indication information".

S210212: The terminal device sends sixth information to the network device.

In some embodiments, the network device may receive the sixth information sent by the terminal device.

In some embodiments, the sixth information may include a report obtained by the terminal device through the foregoing measurement.

In some embodiments, the sixth information may include information obtained by the terminal device through monitoring the performance of the first function.

In some embodiments, the name of the sixth information is not limited, and may be, for example, a "measurement report" or a "performance monitoring report".

In some embodiments, the sixth information may include at least one of:
measured beam information, in which the measured beam information includes beam information measured by the terminal device;
predicted beam information, in which the predicted beam information is beam information predicted and obtained by the terminal device by using the first function;
performance metric information, in which the performance metric information is used to determine at least one of a prediction accuracy, a complexity, or a signaling overhead of the first function;
event information, in which the event information is information about a triggering event based on which the terminal device triggers the sixth information.

For example, the sixth information may include the measured beam information and the predicted beam information.

For another example, the sixth information may include the performance metric information.

For still another example, the sixth information may include the event information.

For still another example, the sixth information may include the performance metric information and the event information.

In some embodiments, the performance metric information may include values of at least one performance metric supported by the terminal device and indicated by the foregoing performance metric type.

In some embodiments, the foregoing triggering event may be at least one of the first type of event, the second type of event, the third type of event, and the fourth type of event indicated by the foregoing event type. The event information may include an event type and/or an event parameter.

S210213: The network device sends seventh information to the terminal device.

In some embodiments, the terminal device may receive the seventh information sent by the network device.

In some embodiments, the seventh information may be used to instruct the terminal device to perform a first operation on the first function, and the first operation includes any one of: selection, activation, deactivation, switching, or fallback.

In some embodiments, the name of the seventh information is not limited, and may be, for example, "control information", "function management information", or "first function lifecycle management information".

In some embodiments, the network device may determine the first operation based on the sixth information, and send the seventh information.

S210214: The terminal device performs the first operation on the first function according to the seventh information.

In some embodiments, any one or more of the foregoing steps S210211 to S210214 may be implemented as an independent embodiment.

In some embodiments, the order of the foregoing steps S210211 to S210214 may be exchanged, or they may be performed simultaneously.

In some embodiments, the foregoing steps S210211 to S210214 are all optional steps.

In this way, the terminal device and the network device can support the first type of performance monitoring.

In some embodiments of the present disclosure, the performance monitoring type is the second type of performance monitoring, and step S2102 may include at least one of the following sub-steps.

S210221: The terminal device sends eleventh information to the network device.

In some embodiments, the network device may receive the eleventh information sent by the terminal device.

In some embodiments, the eleventh information is used to request to start monitoring the performance of the first function.

In some embodiments, the name of the eleventh information is not limited, and may be, for example, "performance monitoring request information", "performance monitoring indication information", or "performance monitoring report information".

Optionally, step S210221 is an optional step. For example, in some cases, exchange of the eleventh information may not be required.

S210222: The network device sends twelfth information to the terminal device.

In some embodiments, the terminal device may receive the twelfth information sent by the network device.

In some embodiments, the twelfth information may be used as a response to the foregoing eleventh information.

In some embodiments, the name of the twelfth information is not limited, and may be, for example, "configuration information", "configuration signaling", "measurement configuration", "measurement report configuration", or "performance monitoring indication information".

Optionally, the twelfth information may be the same as or different from the fifth information in the foregoing embodiments of the present disclosure.

S210223: The terminal device obtains performance metric information corresponding to the first function.

In some embodiments, the performance metric information is used to determine at least one of a prediction accuracy, a complexity, or a signaling overhead of the first function.

In some embodiments, the performance metric information may include values of at least one performance metric supported by the terminal device and indicated by the foregoing performance metric type.

S210224: The terminal device sends eighth information to the network device.

In some embodiments, the network device may receive the eighth information sent by the terminal device.

In some embodiments, the eighth information may include at least one of: the performance metric information, or information about a triggering event that triggers the eighth information.

In some embodiments, the name of the eighth information is not limited, and may be, for example, an "event report" or a "performance metric report".

S210225: The terminal device determines a first operation to be performed on the first function.

In some embodiments, the first operation includes any one of: selection, activation, deactivation, switching, or fallback.

S210226: The terminal device sends ninth information to the network device.

In some embodiments, the network device may receive the ninth information sent by the terminal device.

In some embodiments, the ninth information may be used to indicate the first operation determined by the terminal device.

In some embodiments, the ninth information may be used to indicate the first operation that the terminal device determines to perform on the first function.

In some embodiments, upon determining the first operation to be performed on the first function, the terminal device may send the ninth information to the network device.

In some embodiments, the name of the ninth information is not limited, and may be, for example, "operation notification information", "function operation notification information", or "function operation indication information".

S210227: The network device sends tenth information to the terminal device.

In some embodiments, the terminal device may receive the tenth information sent by the network device.

In some embodiments, the tenth information is response information for the ninth information.

In some embodiments, the name of the tenth information is not limited, and may be, for example, "operation response information" or "function operation response information".

S210228: The terminal device performs the first operation on the first function.

In some embodiments, the foregoing S210226 and S210227 may be omitted.

In some embodiments, the terminal device may perform the first operation before, after, or concurrently with receiving the tenth information.

In some embodiments, the terminal device may perform the first operation before, after, or concurrently with sending the foregoing ninth information.

In some embodiments, any one or more of the foregoing steps S210221 to S210228 may be implemented as an independent embodiment.

In some embodiments, the order of the foregoing steps S210221 to S210228 may be exchanged, or they may be performed simultaneously.

In some embodiments, the foregoing steps S210221 to S210228 are all optional steps.

In this way, the terminal device and the network device can support the second type of performance monitoring.

In some embodiments of the present disclosure, the performance monitoring type is the third type of performance monitoring, and step S2102 may include at least one of the following substeps:
S210231: The terminal device obtains performance metric information corresponding to the first function.

In some embodiments, the performance metric information may be used to determine at least one of a prediction accuracy, a complexity, or a signaling overhead of the first function.

S210232: The terminal device sends thirteenth information to the network device.

In some embodiments, the network device may receive the thirteenth information sent by the terminal device.

In some embodiments, the thirteenth information may include at least one of: the performance metric information, or information about a triggering event that triggers the thirteenth information.

In some embodiments, the name of the thirteenth information is not limited, and may be, for example, an "event report" or a "performance metric report".

In some embodiments, the foregoing step S210231 and step S210232 may each be implemented as an independent embodiment.

In some embodiments, the order of the foregoing step S210231 and step S210232 may be exchanged, or they may be performed simultaneously.

In some embodiments, the foregoing step S210231 and step S210232 are both optional steps.

In some embodiments, step S210231 and step S210232 may be combined with one or more of steps S210211 to S210214 in the foregoing embodiments of the present disclosure as a new embodiment.

In this way, the terminal device and the network device can support the third type of performance monitoring.

FIG. 2B is a schematic interaction diagram of an information transmission method according to an embodiment of the present disclosure. As shown in FIG. 2B, an embodiment of the present disclosure relates to an information transmission method, the method may be performed by a communication system, and the method may include the following steps.

Step S2201: A terminal device sends first information to a network device.

For optional implementations of step S2201, reference may be made to the optional implementations of step S2101 of FIG. 2A and to other related parts in the embodiments involved in FIG. 2A, and details are not described herein again.

In some embodiments, the embodiment shown in FIG. 2B may also be combined with any one or more steps in the embodiment shown in FIG. 2A as a new embodiment.

FIG. 3A is a schematic flowchart of an information transmission method according to an embodiment of the present disclosure. As shown in FIG. 3A, an embodiment of the present disclosure relates to an information transmission method, and the method may be performed by a terminal device. The method may include the following steps.

Step S3101: The terminal device sends first information.

For optional implementations of step S3101, reference may be made to the optional implementations of step S2101 of FIG. 2A and to other related parts in the embodiments involved in FIG. 2A, and details are not described herein again.

In some embodiments, the terminal device may send the first information to a network device, but this is not limited thereto, and the terminal device may also send the first information to another entity.

Step S3102: The terminal device performs performance monitoring of a first function.

For optional implementations of step S3102, reference may be made to the optional implementations of step S2102 of FIG. 2A and to other related parts in the embodiments involved in FIG. 2A, and details are not described herein again.

In some embodiments, the order of the foregoing step S3101 and step S3102 may be exchanged, or they may be performed simultaneously.

In some embodiments, the foregoing step S3101 and step S3102 are both optional steps.

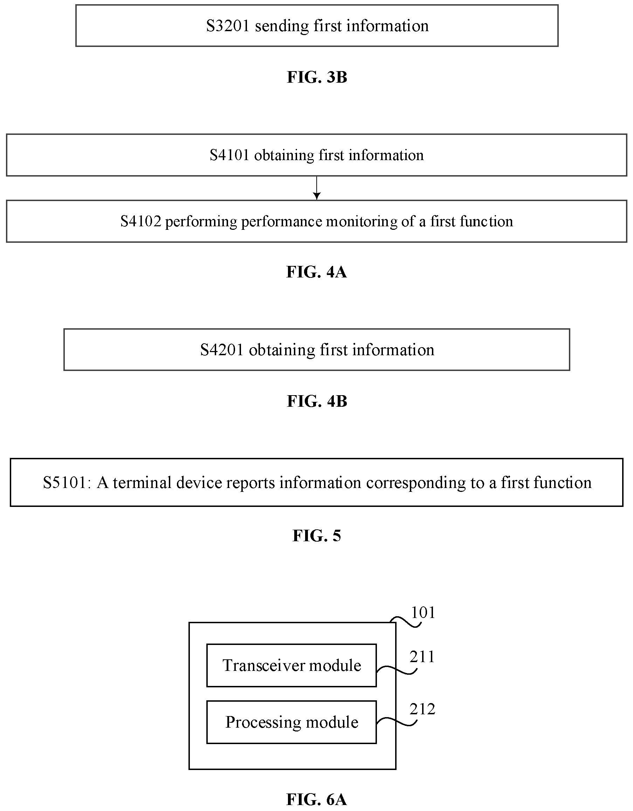

FIG. 3B is a schematic flowchart of an information transmission method according to an embodiment of the present disclosure. As shown in FIG. 3B, an embodiment of the present disclosure relates to an information transmission method, and the method may be performed by a terminal device. The method may include the following steps.

Step S3201: The terminal device sends first information.

For optional implementations of step S3201, reference may be made to the optional implementations of step S2101 of FIG. 2A and step S3101 of FIG. 3A, and to other related parts in the embodiments involved in FIG. 2A and FIG. 3A, and details are not described herein again.

In some embodiments, the embodiment shown in FIG. 3B may also be combined with any one or more steps in the embodiment shown in FIG. 3A as a new embodiment.

In some embodiments, the first information corresponds to a first function, and the first function is an artificial intelligence (AI) function and/or an AI model supported by the terminal device and used to perform beam prediction.

In some embodiments, the first information includes at least one of:
second information, in which the second information includes information for monitoring a performance of the first function supported by the terminal device;
third information, in which the third information includes content information output by the first function supported by the terminal device;
fourth information, in which the fourth information includes a function identifier of the first function supported by the terminal device.

In some embodiments, the second information includes a performance monitoring type, and the performance monitoring type includes any one of:
a first type of performance monitoring;
a second type of performance monitoring; and
a third type of performance monitoring.

In some embodiments, the performance monitoring type is the first type of performance monitoring, and the method further includes at least one of:
receiving fifth information sent by the network device, in which the fifth information is used to instruct the terminal device to perform measurement and/or reporting;
sending sixth information to the network device, in which the sixth information is a report obtained by the terminal device by performing the measurement; or
receiving seventh information sent by the network device, in which the seventh information is used to instruct the terminal device to perform a first operation on the first function, and the first operation includes any one of: selection, activation, deactivation, switching, or fallback; and
performing the first operation on the first function according to the seventh information.

In some embodiments, the sixth information includes at least one of:
measured beam information, in which the measured beam information includes beam information measured by the terminal device;
predicted beam information, in which the predicted beam information is beam information predicted and obtained by the terminal device by using the first function;
performance metric information, in which the performance metric information is used to determine at least one of a prediction accuracy, a complexity, or a signaling overhead of the first function; or
event information, in which the event information is information about a triggering event based on which the terminal device triggers the sixth information.

In some embodiments, the performance monitoring type is the second type of performance monitoring, and the method further includes:
obtaining performance metric information corresponding to the first function, in which the performance metric information is used to determine at least one of a prediction accuracy, a complexity, or a signaling overhead of the first function;
sending eighth information to the network device, in which the eighth information includes at least one of the performance metric information or information about a triggering event that triggers the eighth information.

In some embodiments, the performance monitoring type is the second type of performance monitoring, and the method further includes:
determining a first operation to be performed on the first function, in which the first operation includes any one of: selection, activation, deactivation, switching, or fallback; or
sending ninth information to the network device.

In some embodiments, the method further includes:
receiving tenth information sent by the network device, in which the tenth information is response information for the ninth information; and
performing the first operation on the first function.

In some embodiments, the method further includes:
sending eleventh information to the network device, in which the eleventh information is used to request to start monitoring the performance of the first function; or
receiving twelfth information sent by the network device, in which the twelfth information is used to respond to the eleventh information.

In some embodiments, the performance monitoring type is the third type of performance monitoring, and the method further includes at least one of:
obtaining performance metric information corresponding to the first function, in which the performance metric information is used to determine at least one of a prediction accuracy, a complexity, or a signaling overhead of the first function;
sending thirteenth information to the network device, in which the thirteenth information includes at least one of the performance metric information or information about a triggering event that triggers the thirteenth information.

In some embodiments, the second information includes a performance metric type, and the performance metric type is used to indicate a performance metric supported by the terminal device.

In some embodiments, the performance metric includes at least one of:
a beam prediction accuracy, in which the beam prediction accuracy is a probability that a predicted optimal reference signal resource includes an actual optimal reference signal resource, the predicted optimal reference signal resource is an optimal reference signal resource obtained through prediction by the first function, the actual optimal reference signal resource is an optimal reference signal resource obtained through actual measurement by the terminal device, the optimal reference signal resource includes top N reference signal resources having strongest signal strengths in a predicted second reference signal resource set, and N is a positive integer;
a first signal strength difference, in which the first signal strength difference is a difference between a first signal strength and a second signal strength, the first signal strength is an actual signal strength of the predicted optimal reference signal resource, and the second signal strength is an actual signal strength of the actual optimal reference signal resource;
a second signal strength difference, in which the second signal strength difference is a difference between a first signal strength and a third signal strength, the first signal strength is an actual signal strength of the predicted optimal reference signal resource, and the third signal strength is a predicted signal strength of the predicted optimal reference signal resource;
a third signal strength difference, in which the third signal strength difference is a difference between a second signal strength and a fourth signal strength, the second signal strength is an actual signal strength of the actual optimal reference signal resource, and the fourth signal strength is a predicted signal strength of the actual optimal reference signal resource;
a first signal strength prediction accuracy metric, in which the first signal strength prediction accuracy metric is a probability that a first signal strength difference falls within a first difference range, or an average value of the first signal strength difference, or a value of a cumulative distribution function of the first signal strength difference at a first distribution proportion, and the first distribution proportion is greater than 0 and less than 1;
a second signal strength prediction accuracy metric, in which the second signal strength prediction accuracy metric is a probability that a second signal strength difference falls within a first difference range, or an average value of the second signal strength difference, or a value of a cumulative distribution function of the second signal strength difference at a first distribution proportion;
a third signal strength prediction accuracy metric, in which the third signal strength prediction accuracy metric is a probability that a third signal strength difference falls within a first difference range, or an average value of the third signal strength difference, or a value of a cumulative distribution function of the third signal strength difference at a first distribution proportion;
a throughput difference, in which the throughput difference is a difference between a first throughput and a second throughput, the first throughput is a throughput calculated based on a first SINR, the second throughput is a throughput calculated based on a second SINR, the first SINR is an actual SINR of the predicted optimal reference signal resource, and the second SINR is an actual SINR of the actual optimal reference signal resource;
a throughput prediction accuracy metric, in which the throughput prediction accuracy metric is a probability that the throughput difference falls within a second difference range, or an average value of the throughput difference, or a value of a cumulative distribution function of the throughput difference at a second distribution proportion, and the second distribution proportion is greater than 0 and less than 1;
a reference signal overhead, in which the reference signal overhead is used to indicate a quantity of reference signal resources required by the first function;
an uplink resource overhead, in which the uplink resource overhead is used to indicate a quantity of uplink resources occupied by information that needs to be reported to the network device for the first function to perform prediction and/or for monitoring the performance;
a prediction latency, in which the prediction latency is a duration taken by the first function to perform beam prediction;
input data distribution information, in which the input data distribution information is distribution information of input data of the first function;
output data distribution information, in which the output data distribution information is distribution information of output data of the first function; or
a model complexity.

In some embodiments, the second information includes an event type, and the event type is used to indicate a type of an event that is supported by the terminal device and that triggers monitoring the performance.

In some embodiments, the event type includes at least one of:
a first type of event, in which the first type of event is used to indicate that a performance metric of an activated first function is worse than a first threshold;
a second type of event, in which the second type of event is used to indicate that a performance metric of a deactivated first function is better than a second threshold;
a third type of event, in which the third type of event is used to indicate that a performance metric of an activated first function is worse than a first threshold and that a performance metric of a deactivated first function is better than a second threshold; or
a fourth type of event, in which the fourth type of event is used to indicate that a first difference is better than a fourth threshold, the first difference is a difference by which a second performance metric is better than a first performance metric, the first performance metric is a performance metric of an activated first function, and the second performance metric is a performance metric of a deactivated first function.

In some embodiments, the third information includes at least one of:
a reference signal resource identifier;
a signal strength; or
a confidence corresponding to a signal strength.

In some embodiments,
the confidence is used to indicate the signal strength is obtained through actual measurement or through prediction; or
the signal strength is obtained through prediction, and the confidence is used to indicate a prediction accuracy corresponding to the signal strength.

In some embodiments, the first information is carried in a terminal capability report.

In some embodiments, instances of information included in the first information include mandatory information and optional information.

In some embodiments, the first function is deployed on the terminal device and/or the network device.

FIG. 4A is a schematic flowchart of an information transmission method according to an embodiment of the present disclosure. As shown in FIG. 4A, an embodiment of the present disclosure relates to an information transmission method, the method may be performed by a network device, and the foregoing method includes the following steps.

Step S4101: The network device obtains first information.

For optional implementations of step S4101, reference may be made to the optional implementations of step S2101 of FIG. 2A and to other related parts in the embodiments involved in FIG. 2A, and details are not described herein again.

In some embodiments, the network device may receive the first information sent by a terminal device, but this is not limited thereto, and the network device may also receive the first information sent by another entity.

In some embodiments, the network device may obtain the first information specified by a protocol.

In some embodiments, the network device may perform processing so as to obtain the first information.

Step S4102: The network device performs performance monitoring of a first function.

For optional implementations of step S4102, reference may be made to the optional implementations of step S2102 of FIG. 2A and to other related parts in the embodiments involved in FIG. 2A, and details are not described herein again.

In some embodiments, the order of the foregoing step S4101 and step S4102 may be exchanged, or they may be performed simultaneously.

In some embodiments, the foregoing step S4101 and step S4102 are both optional steps.

FIG. 4B is a schematic flowchart of an information transmission method according to an embodiment of the present disclosure. As shown in FIG. 4B, an embodiment of the present disclosure relates to an information transmission method, and the method may be performed by a network device. The method may include the following steps.

Step S4201: The network device obtains first information.

For optional implementations of step S4201, reference may be made to the optional implementations of step S2101 of FIG. 2A and step S4101 of FIG. 4A, and to other related parts in the embodiments involved in FIG. 2A and FIG. 4A, and details are not described herein again.

In some embodiments, the embodiment shown in FIG. 4B may also be combined with any one or more steps in the embodiment shown in FIG. 4A as a new embodiment.

In some embodiments, the first information corresponds to a first function, and the first function is an artificial intelligence (AI) function and/or an AI model that is supported by a terminal device and that is used for performing beam prediction.

In some embodiments, the first information includes at least one of:
second information, in which the second information includes information for monitoring a performance of the first function supported by the terminal device;
third information, in which the third information includes content information output by the first function supported by the terminal device;
fourth information, in which the fourth information includes a function identifier of the first function supported by the terminal device.

In some embodiments, the second information includes a performance monitoring type, and the performance monitoring type includes any one of:
a first type of performance monitoring;
a second type of performance monitoring; and
a third type of performance monitoring.

In some embodiments, the performance monitoring type is the first type of performance monitoring, and the method further includes at least one of:
sending fifth information to the terminal device, in which the fifth information is used to instruct the terminal device to perform measurement and/or reporting;
receiving sixth information sent by the terminal device, in which the sixth information is a report obtained by the terminal device by performing the measurement; or
determining a first operation according to the sixth information; and
sending seventh information to the terminal device, in which the seventh information is used to instruct the terminal device to perform the first operation on the first function, and the first operation includes any one of: selection, activation, deactivation, switching, or fallback.

In some embodiments, the sixth information includes at least one of:
measured beam information, in which the measured beam information includes beam information measured by the terminal device;
predicted beam information, in which the predicted beam information is beam information predicted and obtained by the terminal device by using the first function;
performance metric information, in which the performance metric information is used to determine at least one of a prediction accuracy, a complexity, or a signaling overhead of the first function; or
event information, in which the event information is information about a triggering event based on which the terminal device triggers the sixth information.

In some embodiments, the performance monitoring type is the second type of performance monitoring, and the method further includes:
receiving eighth information sent by the terminal device, in which the eighth information includes at least one of performance metric information or information about a triggering event that triggers the eighth information, and the performance metric information is used to determine at least one of a prediction accuracy, a complexity, or a signaling overhead of the first function.

In some embodiments, the performance monitoring type is the second type of performance monitoring, and the method further includes:
receiving ninth information sent by the terminal device, in which the ninth information is used to indicate a first operation that the terminal device determines to perform on the first function, and the first operation includes any one of: selection, activation, deactivation, switching, or fallback.

In some embodiments, the method further includes:
sending tenth information to the terminal device, in which the tenth information is response information for the ninth information.

In some embodiments, the method further includes:
receiving eleventh information sent by the terminal device, in which the eleventh information is used to request to start monitoring the performance of the first function; or
sending twelfth information to the terminal device, in which the twelfth information is used to respond to the eleventh information.

In some embodiments, the performance monitoring type is the third type of performance monitoring, and the method further includes:
receiving thirteenth information sent by the terminal device, in which the thirteenth information includes at least one of performance metric information or information about a triggering event that triggers the thirteenth information, and the performance metric information is used to determine at least one of a prediction accuracy, a complexity, or a signaling overhead of the first function.

In some embodiments, the second information includes a performance metric type, and the performance metric type is used to indicate a performance metric supported by the terminal device.

In some embodiments, the performance metric includes at least one of:
a beam prediction accuracy, in which the beam prediction accuracy is a probability that a predicted optimal reference signal resource includes an actual optimal reference signal resource, the predicted optimal reference signal resource is an optimal reference signal resource obtained through prediction by the first function, the actual optimal reference signal resource is an optimal reference signal resource obtained through actual measurement by the terminal device, the optimal reference signal resource includes top N reference signal resources having strongest signal strengths in a predicted second reference signal resource set, and N is a positive integer;
a first signal strength difference, in which the first signal strength difference is a difference between a first signal strength and a second signal strength, the first signal strength is an actual signal strength of the predicted optimal reference signal resource, and the second signal strength is an actual signal strength of the actual optimal reference signal resource;
a second signal strength difference, in which the second signal strength difference is a difference between a first signal strength and a third signal strength, the first signal strength is an actual signal strength of the predicted optimal reference signal resource, and the third signal strength is a predicted signal strength of the predicted optimal reference signal resource;
a third signal strength difference, in which the third signal strength difference is a difference between a second signal strength and a fourth signal strength, the second signal strength is an actual signal strength of the actual optimal reference signal resource, and the fourth signal strength is a predicted signal strength of the actual optimal reference signal resource;
a first signal strength prediction accuracy metric, in which the first signal strength prediction accuracy metric is a probability that a first signal strength difference falls within a first difference range, or an average value of the first signal strength difference, or a value of a cumulative distribution function of the first signal strength difference at a first distribution proportion, and the first distribution proportion is greater than 0 and less than 1;
a second signal strength prediction accuracy metric, in which the second signal strength prediction accuracy metric is a probability that a second signal strength difference falls within a first difference range, or an average value of the second signal strength difference, or a value of a cumulative distribution function of the second signal strength difference at a first distribution proportion;
a third signal strength prediction accuracy metric, in which the third signal strength prediction accuracy metric is a probability that a third signal strength difference falls within a first difference range, or an average value of the third signal strength difference, or a value of a cumulative distribution function of the third signal strength difference at a first distribution proportion;
a throughput difference, in which the throughput difference is a difference between a first throughput and a second throughput, the first throughput is a throughput calculated based on a first SINR, the second throughput is a throughput calculated based on a second SINR, the first SINR is an actual SINR of the predicted optimal reference signal resource, and the second SINR is an actual SINR of the actual optimal reference signal resource;
a throughput prediction accuracy metric, in which the throughput prediction accuracy metric is a probability that the throughput difference falls within a second difference range, or an average value of the throughput difference, or a value of a cumulative distribution function of the throughput difference at a second distribution proportion, and the second distribution proportion is greater than 0 and less than 1;
a reference signal overhead, in which the reference signal overhead is used to indicate a quantity of reference signal resources required by the first function;
an uplink resource overhead, in which the uplink resource overhead is used to indicate a quantity of uplink resources occupied by information that needs to be reported to the network device for the first function to perform prediction and/or for monitoring the performance;
a prediction latency, in which the prediction latency is a duration taken by the first function to perform beam prediction;
input data distribution information, in which the input data distribution information is distribution information of input data of the first function;
output data distribution information, in which the output data distribution information is distribution information of output data of the first function; or
a model complexity.

In some embodiments, the second information includes an event type, and the event type is used to indicate a type of an event that is supported by the terminal device and that triggers monitoring the performance.

In some embodiments, the event type includes at least one of:
a first type of event, in which the first type of event is used to indicate that a performance metric of an activated first function is worse than a first threshold;
a second type of event, in which the second type of event is used to indicate that a performance metric of a deactivated first function is better than a second threshold;
a third type of event, in which the third type of event is used to indicate that a performance metric of an activated first function is worse than a first threshold and that a performance metric of a deactivated first function is better than a second threshold; or
a fourth type of event, in which the fourth type of event is used to indicate that a first difference is better than a fourth threshold, the first difference is a difference by which a second performance metric is better than a first performance metric, the first performance metric is a performance metric of an activated first function, and the second performance metric is a performance metric of a deactivated first function.

In some embodiments, the third information includes at least one of:
a reference signal resource identifier;
a signal strength; or
a confidence corresponding to a signal strength.

In some embodiments,
the confidence is used to indicate the signal strength is obtained through actual measurement or through prediction; or
the signal strength is obtained through prediction, and the confidence is used to indicate a prediction accuracy corresponding to the signal strength.

In some embodiments, the first information is carried in a terminal capability report.

In some embodiments, instances of information included in the first information include mandatory information and optional information.

In some embodiments, the first function is deployed on the terminal device and/or the network device.

FIG. 5 is a schematic flowchart of an information transmission method according to an embodiment of the present disclosure. As shown in FIG. 5, an embodiment of the present disclosure relates to an information transmission method, the method may be performed by a communication system, and the method may include the following steps.

Step S5101: A terminal device reports information corresponding to a first function.

In some embodiments, the first function is an AI function (functionality) or an AI model (model).

In some embodiments, the information corresponding to the first function may be referred to as first information.

In some embodiments, the information corresponding to the first function may include second information for use in monitoring the performance of the first function.

In some embodiments, the second information may include a performance monitoring type, and the performance monitoring type may include any one of:
a first type of performance monitoring (Type 1 performance monitoring); optionally, the first type of performance monitoring may be performance monitoring controlled by the network device;
a second type of performance monitoring (Type 2 performance monitoring); optionally, the second type of performance monitoring may be performance monitoring controlled by the terminal device; and
a third type of performance monitoring; optionally, the third type of performance monitoring may be performance monitoring that is controlled by the network device and in which performance metric information or event information is reported by the terminal device.

In this way, the terminal device can report the supported performance monitoring type to the network device through the second information, and the network device can configure a performance monitoring type for the terminal device based on the second information, so that the flexibility and reliability of the performance monitoring can be improved.

In some embodiments of the present disclosure, for different performance monitoring types, the manners in which the terminal device and the network device monitor the performance of the first function may be different.

In some embodiments, based on the first type of performance monitoring, the terminal device and/or the network device may perform at least one of the following steps:
the network device may send, to the terminal device, a configuration (or signaling) instructing the terminal device to perform measurement and/or reporting;
the terminal device may perform different optional operations: Option 1, the terminal device may send a report to the network device, for example, by sending measured beam information and/or predicted beam information, in which the measured beam information includes beam information obtained by the terminal device through measurement (for example, the measured RSRPs of setA), and the predicted beam information includes beam information predicted and obtained by the terminal device by using the first function (for example, the predicted RSRPs of setA), and the measured beam information and/or the predicted beam information may be used by the network device to calculate a performance metric; Option 2, the terminal device may calculate a performance metric based on the measured beam information and the predicted beam information, and send performance metric information and/or event information triggered based on the performance metric information to the network device;
the network device may instruct the terminal device to perform a first operation on the first function; optionally, the first operation may be referred to as a lifecycle management (LCM) operation and may include any one of selection, activation, deactivation, switching, or fallback, for example, selecting, activating, deactivating, switching, or performing fallback for the first function (that is, switching the first function to a state at an earlier time point, such as restoring the first function to an initial state).

In some other embodiments, based on the second type of performance monitoring, the terminal device and/or the network device may perform at least one of the following steps:
the terminal device sends a performance monitoring request (or indication or report) to the network device; optionally, in some cases the performance monitoring request may not be required;
the network device may send, to the terminal device, a configuration (or signaling) instructing the terminal device to perform measurement and/or reporting;
the terminal device may calculate a performance metric based on the predicted beam information and the measured beam information, and send performance metric information and/or event information triggered based on the performance metric information to the network device;
if the first function is deployed on the terminal device, then the terminal device may determine to perform a first operation on the first function; optionally, the first operation may include any one of: selection, activation, deactivation, switching, or fallback.

In still other embodiments, based on the third type of performance monitoring, the terminal device and/or the network device may perform at least one of the following steps:
the network device may send, to the terminal device, a configuration (or signaling) instructing the terminal device to perform measurement and/or reporting;
the terminal device may calculate a performance metric based on the predicted beam information and the measured beam information, and send performance metric information and/or event information triggered based on the performance metric information to the network device;
the network device may instruct the terminal device to perform a first operation on the first function; optionally, the first operation may include any one of: selection, activation, deactivation, switching, or fallback.

In some embodiments, the third type of performance monitoring may be a subtype of the first type of performance monitoring.

In some embodiments, the foregoing second information may include at least one performance metric supported by the terminal device, which are as follows.

Beam prediction accuracy (beam prediction accuracy for top-1/K beams or beam pairs): an accurate prediction means that the predicted strongest beam or beam-pair ID includes the actual strongest beam or beam-pair ID, or that the predicted strongest beam or beam-pair ID is included among the actual N strongest beam or beam-pair IDs. A downlink transmit beam ID may be equivalent to a reference signal resource ID, such as an SSB ID, a CSI-RS ID, or an SRS ID. A downlink receive beam ID is an Rx beam ID of the terminal device. A beam-pair ID corresponds to a combination of a downlink transmit beam and a downlink receive beam. "Strongest" means having the highest L1-RSRP or L1-SINR. Optionally, this metric may represent the accuracy of beam information output after multiple inferences by the model and may be expressed, for example, as a ratio.

L1-RSRP-within-1-dB beam prediction accuracy (beam prediction accuracy): the accuracy when the difference between the actual L1-RSRP of a predicted optimal beam or beam pair and the actual L1-RSRP of the actual optimal beam or beam pair is within 1 dB. Optionally, this metric may represent the accuracy of beam information output after multiple inferences by the model and may be expressed, for example, as a ratio.

L1-RSRP difference: the difference between the actual L1-RSRP of a predicted optimal beam or beam pair and the actual L1-RSRP of the actual optimal beam or beam pair, for example, an average value of X dB or a value of Y dB at the 5% proportion of the cumulative distribution function. Optionally, the metric may instead be the proportion of L1-RSRP differences below or above a threshold.

Predicted L1-RSRP difference: the difference between the actual L1-RSRP and predicted L1-RSRP of a predicted optimal beam or beam pair, for example, an average value of X dB or a value of Y dB at the 5% proportion of the cumulative distribution function. Optionally, the metric may instead be the proportion of predicted L1-RSRP differences below or above a threshold.

Average UE throughput, or UE throughput at the 5% proportion of the cumulative distribution function: based on the predicted strongest beam or beam pair and the actual strongest beam or beam pair, the SINRs corresponding to the two beams or beam pairs are obtained, the respective capacities are calculated using the Shannon capacity formula, and the difference between the capacities is the metric.

Reference signal overhead: that is, how many reference signal resources the first function requires; the main influencing factors include the size of setB corresponding to the model input, and the number of historical measurement time instances in the case of time domain prediction.

Uplink control information overhead: if the first function is deployed on the network device (for example, an NW-side model), then all the measurement results of setB need to be reported to the network device, namely, the signaling overhead associated with the reporting.

Prediction latency, which may be t milliseconds.

Model input data distribution.

Model output data distribution.

In some embodiments, the foregoing second information may include an event supported by the terminal, and the event may be an event used for triggering performance monitoring reporting.

Optionally, each performance metric may correspond to at least one of the following four events:
Event #1: the performance of the currently activated (active) first function (functionality/model) is lower than a threshold.
Event #2: the performance of the currently deactivated (inactive) first function is higher than a threshold.
Event #3: the performance of the currently activated first function is lower than a threshold, and the performance of the currently deactivated first function is higher than a threshold.
Event #4: the performance of the currently deactivated first function is higher than the performance of the currently activated first function by an offset.

It should be noted that a high value of a performance metric may indicate good performance; for example, a high beam prediction accuracy indicates good model performance, whereas a high L1-RSRP difference indicates poor model performance. Therefore, event definitions may differ depending on the performance metric.

In some embodiments, the foregoing information corresponding to the first function may further include third information, and the third information may include the content of the model output supported by the terminal. For example, the third information may include at least one of:
a reference signal resource identifier (beam ID);
an L1-RSRP corresponding to each reference signal resource identifier; or
a confidence corresponding to each L1-RSRP.

In one implementation, the confidence may be used to indicate whether the L1-RSRP is actually measured or predicted.

In one implementation, if the L1-RSRP is predicted, then the confidence may indicate the prediction accuracy of the L1-RSRP.

In some embodiments, the foregoing information corresponding to the first function may further include fourth information, and the fourth information may include at least one of:
an AI function identifier;
an application instance corresponding to the AI function, in which the application instance may include any one of: spatial domain beam prediction, time domain beam prediction, or spatial domain beam prediction and time domain beam prediction;
the relationship between the first set (setB) and the second set (setA) corresponding to the AI function, in which the relationship may include at least one of: setB is a subset of setA (applicable to both spatial domain beam prediction and time domain beam prediction); setB is different from setA (applicable to both spatial domain beam prediction and time domain beam prediction); setB is the same as setA (applicable only to time domain beam prediction);
the quantity of beams (beam pairs) in the first set, or the range in which the quantity lies, in which the first set is a set of beams (beam pairs) corresponding to the input values of the model;
the positions, in the second set, of the beams (beam pairs) corresponding to the beams (beam pairs) in the first set, in which the first set is a subset of the second set;
the quantity of beams (beam pairs) in the second set, in which the second set is a set of beams (beam pairs) corresponding to the output of the model;
the ratio of the quantity of beams (beam pairs) in the first set to the quantity of beams (beam pairs) in the second set, in which the first set and the second set are different;
the mapping relationship between the beams (beam pairs) in the first set and the beams (beam pairs) in the second set, in which the first set and the second set are different;
the time quantity value corresponding to the second set (the number of predicted future time instances), which may be applicable only to time domain beam prediction;
the pattern of the time corresponding to the first set and the time corresponding to the second set, which may be applicable only to time domain beam prediction;
base station coverage related parameter information: the base station coverage related parameter information includes a deployment type being Urban macro, Urban micro, indoor, dense urban, or rural; the base station coverage related parameter information may further include the inter-site distance between base stations, for example an ISD of 200 m, 500 m, 1000 m, 100 m, or the like;
user distribution.

In some embodiments, among the foregoing second information, third information, and fourth information, at least some information may be mandatory to report and some may be optional to report.

In some embodiments, the foregoing information may be reported using a terminal-capability reporting mechanism (UE capability).

In some embodiments, the first function may include an AI function and an AI model, and the terminal device may perform AI function identification (functionality identification) and/or AI model identification (model identification).

In some embodiments, the AI function identification merely informs the network device that a certain AI function is supported, whereas whether the terminal device supports one or more AI models under the AI function may not need to be made known to the network device. Then, when the network device instructs the terminal device to activate the AI function, the terminal device may determine by itself to activate a certain AI model under the AI function. Moreover, switching by the terminal device between different AI models under the AI function also does not need to be made known to the network device.

In some embodiments, the AI model identification can inform the network device that the terminal device supports a certain AI model. The AI model may correspond to one or more AI functions. The network device may instruct the terminal to activate or deactivate the AI model.

In this way, by means of the reporting of the AI function or model identification, the terminal device can report the performance monitoring type, the performance metric, or the event type that is supported by the terminal and that corresponds to the function or model, as well as the supported model output, so that the network device selects an appropriate function or model according to the requirements.

In some embodiments of the present disclosure, there is provided a communication system, in which the communication system may include a terminal device and a network device; the terminal device may perform the information transmission method performed by the terminal device in the foregoing embodiments of the present disclosure, and the network device may perform the information transmission method performed by the network device in the foregoing embodiments of the present disclosure.

The embodiments of the present disclosure further provide an apparatus for implementing any of the foregoing methods. For example, an apparatus is provided, in which the foregoing apparatus includes units or modules for implementing the steps performed by the terminal device in any of the foregoing methods. For another example, another apparatus is further provided, including units or modules for implementing the steps performed by the network device (for example, an access network device, a core network function node, or a core network device) in any of the foregoing methods.

It should be understood that the division of the units or modules in the foregoing apparatus is merely a logical functional division. In an actual implementation, the units or modules may be integrated, in whole or in part, into one physical entity or may be physically separate. In addition, the units or modules in the apparatus may be implemented by a processor executing software. For example, the apparatus may include a processor connected to a memory that stores instructions, and the processor may invoke the instructions to implement any of the foregoing methods or the functions of the units or modules. The processor may be a general-purpose processor, such as a central processing unit (CPU) or a microprocessor, and the memory may be internal or external to the apparatus. Alternatively, the units or modules may be implemented by hardware circuitry, and some or all of their functions may be implemented by designing the hardware circuitry, which may be understood as one or more processors. For example, in one implementation, the hardware circuitry is an application-specific integrated circuit (ASIC), and some or all of the functions are implemented through the logical relationships among circuit elements. In another implementation, the hardware circuitry may be implemented by a programmable logic device (PLD), such as a field-programmable gate array (FPGA), which may include numerous logic-gate circuits whose interconnections are configured by a configuration file to implement some or all of the functions. All units or modules may be implemented entirely by a processor executing software, entirely by hardware circuitry, or partly by each.

In the embodiments of the present disclosure, a processor is a circuit having signal-processing capability. In one implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may implement functions through logical relationships in hardware circuitry, which may be fixed or reconfigurable. For example, the processor may be hardware circuitry implemented by an application-specific integrated circuit (ASIC) or a programmable logic device (PLD), such as an FPGA. In reconfigurable hardware circuitry, loading a configuration file to configure the hardware circuitry may be understood as loading instructions to implement some or all of the functions of the foregoing units or modules. The processor may also be hardware circuitry designed for artificial intelligence, such as a neural network processing unit (NPU), a tensor processing unit (TPU), or a deep learning processing unit (DPU), which may be understood as an ASIC.

FIG. 6A is a schematic structural diagram of a terminal device provided in an embodiment of the present disclosure. As shown in FIG. 6A, the terminal device 101 may include at least one of a transceiver module 211, a processing module 212, and the like. In some embodiments, the transceiver module 211 is configured to send first information to a network device, in which the first information corresponds to a first function, and the first function is an artificial intelligence (AI) function and/or an AI model supported by the terminal device and used to perform beam prediction; in which the first information includes at least one of: second information, in which the second information includes information for monitoring a performance of the first function supported by the terminal device; third information, in which the third information includes content information output by the first function supported by the terminal device; and fourth information, in which the fourth information includes a function identifier of the first function supported by the terminal device. Optionally, the transceiver module 211 may be configured to perform at least one of the communication steps such as sending and/or receiving that are performed by the terminal device in any of the foregoing methods (for example, step S2101, but not limited thereto), and details are not described herein again. Optionally, the processing module 212 may be configured to perform at least one of the other steps performed by the terminal device in any of the foregoing methods (for example, step S2102, but not limited thereto), and details are not described herein again.

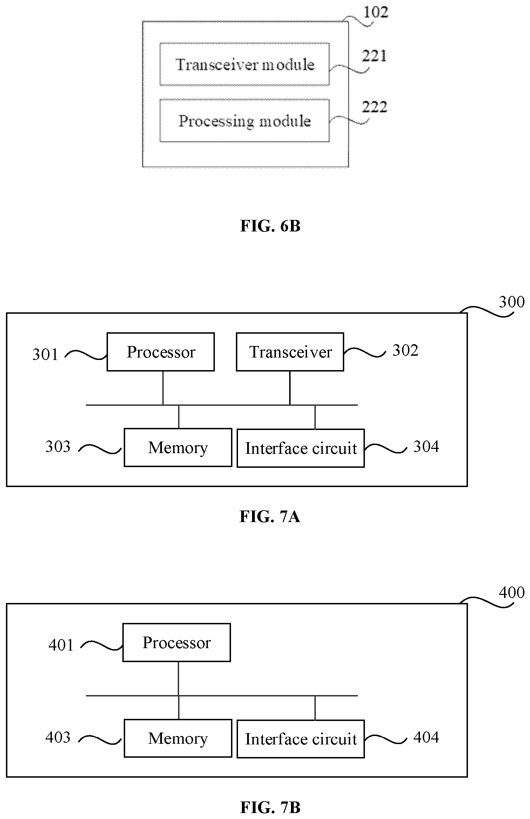

FIG. 6B is a schematic structural diagram of a network device provided in an embodiment of the present disclosure. As shown in FIG. 6B, the network device 102 may include at least one of a transceiver module 221, a processing module 222, and the like. In some embodiments, the transceiver module 221 is configured to receive first information sent by a terminal device, in which the first information corresponds to a first function, and the first function is an artificial intelligence (AI) function and/or an AI model supported by the terminal device and used to perform beam prediction; in which the first information includes at least one of: second information, in which the second information includes information for monitoring a performance of the first function supported by the terminal device; third information, in which the third information includes content information output by the first function supported by the terminal device; and fourth information, in which the fourth information includes a function identifier of the first function supported by the terminal device. Optionally, the transceiver module 221 may be configured to perform at least one of the communication steps such as sending and/or receiving that are performed by the network device in any of the foregoing methods (for example, step S2101, but not limited thereto), and details are not described herein again. Optionally, the processing module 222 may be configured to perform at least one of the other steps performed by the network device in any of the foregoing methods (for example, step S2102, but not limited thereto), and details are not described herein again.

In some embodiments, the transceiver module may include a sending module and/or a receiving module, and the sending module and the receiving module may be separate or may be integrated together. Optionally, the transceiver module may be interchangeable with a transceiver.

In some embodiments, the processing module may be one module, or may include a plurality of sub-modules. Optionally, the foregoing plurality of sub-modules respectively perform all or some of the steps that the processing module is required to perform. Optionally, the processing module may be interchangeable with a processor.

FIG. 7A is a schematic structural diagram of a communication device provided in an embodiment of the present disclosure. The communication device 300 may be a network device (for example, an access network device or a core network device), may be a terminal device (for example, user equipment), may be a chip, a chip system, a processor, or the like that supports a network device in implementing any of the foregoing methods, and may also be a chip, a chip system, a processor, or the like that supports a terminal device in implementing any of the foregoing methods. The communication device 300 may be configured to implement the methods described in the foregoing method embodiments, and for details, reference may be made to the descriptions in the foregoing method embodiments.

As shown in FIG. 7A, the communication device 300 includes one or more processors 301. The processor 301 may be a general-purpose processor, a dedicated processor, or the like, and may be, for example, a baseband processor or a central processor. The baseband processor may be configured to process communication protocols and communication data, and the central processor may be configured to control a communication apparatus (such as a base station, a baseband chip, a terminal device, a terminal device chip, a DU, or a CU), execute programs, and process data of the programs. Optionally, the communication device 300 may be configured to perform any of the foregoing methods. Optionally, the one or more processors 301 are configured to invoke instructions so as to cause the communication device 300 to perform any of the foregoing methods.

In some embodiments, the communication device 300 may further include one or more transceivers 302. When the communication device 300 includes one or more transceivers 302, the transceiver 302 may perform at least one of the communication steps such as sending and/or receiving in the foregoing methods (for example, step S2101, but not limited thereto), and the processor 301 may perform at least one of the other steps (for example, step S2102, but not limited thereto).

In some embodiments, the transceiver may include a receiver and/or a transmitter, which may be separate or integrated. Optionally, the terms "transceiver," "transceiver unit," "transceiver apparatus," "transceiver circuit," "interface circuit," "interface," and the like may be interchangeable; the terms "transmitter," "transmitting unit," "transmitting apparatus," "transmitting circuit," and the like may be interchangeable; and the terms "receiver," "receiving unit," "receiving apparatus," "receiving circuit," and the like may be interchangeable.

In some embodiments, the communication device 300 further includes one or more memories 303 for storing data. Optionally, all or part of the memory 303 may also be located outside the communication device 300. In an optional embodiment, the communication device 300 may include one or more interface circuits 304. Optionally, the interface circuit 304 is connected to the memory 303, and the interface circuit 304 may be configured to receive data from the memory 303 or another apparatus, and may be configured to send data to the memory 303 or another apparatus. For example, the interface circuit 304 may read the data stored in the memory 303 and send the data to the processor 301.

The communication device 300 described in the foregoing embodiments may be a network device or a terminal device, but the scope of the communication device 300 in the present disclosure is not limited thereto, and its structure is not limited to that shown in FIG. 7A. The communication device may be an independent device or part of a larger device. For example, the communication device 300 may be: (1) an independent integrated circuit (IC), chip, chip system, or subsystem; (2) a set of one or more ICs, which may also include a storage component for storing data and programs; (3) an ASIC, such as a modem; (4) a module embeddable in another device; (5) a receiver, terminal device, intelligent terminal device, cellular telephone, wireless device, handset, mobile unit, on-board device, network device, cloud device, artificial intelligence device, or the like; or (6) another similar device.

FIG. 7B is a schematic structural diagram of a chip 400 according to an embodiment of the present disclosure. When the communication device 300 is a chip or chip system, reference may be made to the schematic structure of the chip 400 shown in FIG. 7B, without being limited thereto.

The chip 400 includes one or more processors 401, and the chip 400 is configured to perform any of the foregoing methods.

In some embodiments, the chip 400 further includes one or more interface circuits 404. Optionally, the terms interface circuit, interface, transceiver pin, and the like may be interchangeable with each other. In some embodiments, the chip 400 further includes one or more memories 403 for storing data. Optionally, all or part of the memory 403 may be located outside the chip 400.

Optionally, the interface circuit 404 is connected to the memory 403, the interface circuit 404 may be configured to receive data from the memory 403 or another apparatus, and the interface circuit 404 may be configured to send data to the memory 403 or another apparatus. For example, the interface circuit 404 may read the data stored in the memory 403 and send the data to the processor 401.

In some embodiments, the interface circuit 404 performs at least one of the communication steps such as sending and/or receiving in the foregoing methods (for example, step S2101, but not limited thereto). That the interface circuit 404 performs the communication steps such as sending and/or receiving in the foregoing methods means, for example, that the interface circuit 404 performs data interaction between the processor 401, the chip 400, the memory 403, or a transceiver component. In some embodiments, the processor 401 may perform at least one of the other steps (for example, step S2102, but not limited thereto).

The modules and/or components described in the embodiments of the virtual apparatus, the physical apparatus, the chip, and the like may be arbitrarily combined or separated as the case may be. Optionally, some or all of the steps may also be performed cooperatively by a plurality of modules and/or components, which is not limited herein.

The embodiments of the present disclosure further provide a storage medium storing instructions that, when executed by the communication device 300, cause the communication device 300 to perform any of the foregoing methods. Optionally, the storage medium is an electronic storage medium. Optionally, the storage medium is a computer-readable storage medium, without being limited thereto, and may also be a storage medium readable by another apparatus. Optionally, the storage medium may be non-transitory, without being limited thereto, and may also be transitory.

The embodiments of the present disclosure further provide a program product that, when executed by the communication device 300, causes the communication device 300 to perform any of the foregoing optional methods. Optionally, the program product may be a computer program product including a computer program and/or instructions that, when executed by a communication device, cause the communication device to implement any of the foregoing optional methods.

The embodiments of the present disclosure further provide a computer program that, when executed by a computer, causes the computer to perform any of the foregoing optional methods.

## Claims

1. An information transmission method, performed by a terminal device, comprising:
sending first information to a network device, wherein the first information corresponds to a first function, and the first function is an artificial intelligence (AI) function and/or an AI model supported by the terminal device and used to perform beam prediction;
wherein the first information comprises at least one of:
second information, wherein the second information comprises information for monitoring a performance of the first function supported by the terminal device;
third information, wherein the third information comprises content information output by the first function supported by the terminal device; or
fourth information, wherein the fourth information comprises a function identifier of the first function supported by the terminal device.

2. The method according to claim 1, wherein the second information comprises a performance monitoring type, and the performance monitoring type comprises any one of:
a first type of performance monitoring;
a second type of performance monitoring; or
a third type of performance monitoring.

3. The method according to claim 2, wherein the performance monitoring type is the first type of performance monitoring, and the method further comprises at least one of:
receiving fifth information sent by the network device, wherein the fifth information is used to instruct the terminal device to perform measurement and/or reporting;
sending sixth information to the network device, wherein the sixth information is a report obtained by the terminal device by performing the measurement; or
receiving seventh information sent by the network device, wherein the seventh information is used to instruct the terminal device to perform a first operation on the first function, and the first operation comprises any one of: selection, activation, deactivation, switching, or fallback; and
performing the first operation on the first function according to the seventh information.

4. The method according to claim 3, wherein the sixth information comprises at least one of:
measured beam information, wherein the measured beam information comprises beam information measured by the terminal device;
predicted beam information, wherein the predicted beam information is beam information predicted and obtained by the terminal device by using the first function;
performance metric information, wherein the performance metric information is used to determine at least one of a prediction accuracy, a complexity, or a signaling overhead of the first function; or
event information, wherein the event information is information about a triggering event based on which the terminal device triggers the sixth information.

5. The method according to claim 2, wherein the performance monitoring type is the second type of performance monitoring, and the method further comprises at least one of:
obtaining performance metric information corresponding to the first function, wherein the performance metric information is used to determine at least one of a prediction accuracy, a complexity, or a signaling overhead of the first function;
sending eighth information to the network device, wherein the eighth information comprises at least one of the performance metric information or information about a triggering event that triggers the eighth information.

6. The method according to claim 2, wherein the performance monitoring type is the second type of performance monitoring, and the method further comprises at least one of:
determining a first operation to be performed on the first function, wherein the first operation comprises any one of: selection, activation, deactivation, switching, or fallback; or
sending ninth information to the network device, wherein the ninth information is used to indicate the first operation determined by the terminal device.

7. The method according to claim 6, further comprising:
receiving tenth information sent by the network device, wherein the tenth information is response information for the ninth information; and
performing the first operation on the first function.

8. The method according to any one of claims 5 to 7, further comprising at least one of:
sending eleventh information to the network device, wherein the eleventh information is used to request to start monitoring the performance of the first function; or
receiving twelfth information sent by the network device, wherein the twelfth information is used to respond to the eleventh information.

9. The method according to claim 2, wherein the performance monitoring type is the third type of performance monitoring, and the method further comprises at least one of:
obtaining performance metric information corresponding to the first function, wherein the performance metric information is used to determine at least one of a prediction accuracy, a complexity, or a signaling overhead of the first function; or
sending thirteenth information to the network device, wherein the thirteenth information comprises at least one of the performance metric information or information about a triggering event that triggers the thirteenth information.

10. The method according to any one of claims 1 to 9, wherein the second information comprises a performance metric type, and the performance metric type is used to indicate a performance metric supported by the terminal device.

11. The method according to claim 10, wherein the performance metric comprises at least one of:
a beam prediction accuracy, wherein the beam prediction accuracy is a probability that a predicted optimal reference signal resource includes an actual optimal reference signal resource, the predicted optimal reference signal resource is an optimal reference signal resource obtained through prediction by the first function, the actual optimal reference signal resource is an optimal reference signal resource obtained through actual measurement by the terminal device, the optimal reference signal resource comprises top N reference signal resources having strongest signal strengths in a predicted second reference signal resource set, and N is a positive integer;
a first signal strength difference, wherein the first signal strength difference is a difference between a first signal strength and a second signal strength, the first signal strength is an actual signal strength of the predicted optimal reference signal resource, and the second signal strength is an actual signal strength of the actual optimal reference signal resource;
a second signal strength difference, wherein the second signal strength difference is a difference between a first signal strength and a third signal strength, the first signal strength is an actual signal strength of the predicted optimal reference signal resource, and the third signal strength is a predicted signal strength of the predicted optimal reference signal resource;
a third signal strength difference, wherein the third signal strength difference is a difference between a second signal strength and a fourth signal strength, the second signal strength is an actual signal strength of the actual optimal reference signal resource, and the fourth signal strength is a predicted signal strength of the actual optimal reference signal resource;
a first signal strength prediction accuracy metric, wherein the first signal strength prediction accuracy metric is a probability that a first signal strength difference falls within a first difference range, or an average value of the first signal strength difference, or a value of a cumulative distribution function of the first signal strength difference at a first distribution proportion, and the first distribution proportion is greater than 0 and less than 1;
a second signal strength prediction accuracy metric, wherein the second signal strength prediction accuracy metric is a probability that a second signal strength difference falls within a first difference range, or an average value of the second signal strength difference, or a value of a cumulative distribution function of the second signal strength difference at a first distribution proportion;
a third signal strength prediction accuracy metric, wherein the third signal strength prediction accuracy metric is a probability that a third signal strength difference falls within a first difference range, or an average value of the third signal strength difference, or a value of a cumulative distribution function of the third signal strength difference at a first distribution proportion;
a throughput difference, wherein the throughput difference is a difference between a first throughput and a second throughput, the first throughput is a throughput calculated based on a first SINR, the second throughput is a throughput calculated based on a second SINR, the first SINR is an actual SINR of the predicted optimal reference signal resource, and the second SINR is an actual SINR of the actual optimal reference signal resource;
a throughput prediction accuracy metric, wherein the throughput prediction accuracy metric is a probability that the throughput difference falls within a second difference range, or an average value of the throughput difference, or a value of a cumulative distribution function of the throughput difference at a second distribution proportion, and the second distribution proportion is greater than 0 and less than 1;
a reference signal overhead, wherein the reference signal overhead is used to indicate a quantity of reference signal resources required by the first function;
an uplink resource overhead, wherein the uplink resource overhead is used to indicate a quantity of uplink resources occupied by information that needs to be reported to the network device for the first function to perform prediction or for monitoring the performance;
a prediction latency, wherein the prediction latency is a duration taken by the first function to perform beam prediction;
input data distribution information, wherein the input data distribution information is distribution information of input data of the first function;
output data distribution information, wherein the output data distribution information is distribution information of output data of the first function; or
a model complexity.

12. The method according to any one of claims 1 to 11, wherein the second information comprises an event type, and the event type is used to indicate a type of an event that is supported by the terminal device and that triggers monitoring the performance.

13. The method according to claim 12, wherein the event type comprises at least one of:
a first type of event, wherein the first type of event is used to indicate that a performance metric of an activated first function is worse than a first threshold;
a second type of event, wherein the second type of event is used to indicate that a performance metric of a deactivated first function is better than a second threshold;
a third type of event, wherein the third type of event is used to indicate that a performance metric of an activated first function is worse than a first threshold and that a performance metric of a deactivated first function is better than a second threshold; or
a fourth type of event, wherein the fourth type of event is used to indicate that a first difference is better than a fourth threshold, the first difference is a difference by which a second performance metric is better than a first performance metric, the first performance metric is a performance metric of an activated first function, and the second performance metric is a performance metric of a deactivated first function.

14. The method according to any one of claims 1 to 13, wherein the third information comprises at least one of:
a reference signal resource identifier;
a signal strength; or
a confidence corresponding to a signal strength.

15. The method according to claim 14, wherein:
the confidence is used to indicate the signal strength is obtained through actual measurement or through prediction; or
the signal strength is obtained through prediction, and the confidence is used to indicate a prediction accuracy corresponding to the signal strength.

16. The method according to any one of claims 1 to 15, wherein the first information is carried in a terminal capability report.

17. The method according to any one of claims 1 to 16, wherein instances of information included in the first information comprise mandatory information and optional information.

18. The method according to any one of claims 1 to 17, wherein the first function is deployed on the terminal device and/or the network device.

19. An information transmission method, performed by a network device, comprising:
receiving first information sent by a terminal device, wherein the first information corresponds to a first function, and the first function is an artificial intelligence (AI) function and/or an AI model supported by the terminal device and used to perform beam prediction;
wherein the first information comprises at least one of:
second information, wherein the second information comprises information for monitoring a performance of the first function supported by the terminal device;
third information, wherein the third information comprises content information output by the first function supported by the terminal device;
fourth information, wherein the fourth information comprises a function identifier of the first function supported by the terminal device.

20. The method according to claim 19, wherein the second information comprises a performance monitoring type, and the performance monitoring type comprises any one of:
a first type of performance monitoring;
a second type of performance monitoring; or
a third type of performance monitoring.

21. The method according to claim 20, wherein the performance monitoring type is the first type of performance monitoring, and the method further comprises at least one of:
sending fifth information to the terminal device, wherein the fifth information is used to instruct the terminal device to perform measurement and/or reporting;
receiving sixth information sent by the terminal device, wherein the sixth information is a report obtained by the terminal device by performing the measurement; or
determining a first operation according to the sixth information; and
sending seventh information to the terminal device, wherein the seventh information is used to instruct the terminal device to perform the first operation on the first function, and the first operation comprises any one of: selection, activation, deactivation, switching, or fallback.

22. The method according to claim 21, wherein the sixth information comprises at least one of:
measured beam information, wherein the measured beam information comprises beam information measured by the terminal device;
predicted beam information, wherein the predicted beam information is beam information predicted and obtained by the terminal device by using the first function;
performance metric information, wherein the performance metric information is used to determine at least one of a prediction accuracy, a complexity, or a signaling overhead of the first function; or
event information, wherein the event information is information about a triggering event based on which the terminal device triggers the sixth information.

23. The method according to claim 20, wherein the performance monitoring type is the second type of performance monitoring, and the method further comprises:
receiving eighth information sent by the terminal device, wherein the eighth information comprises at least one of performance metric information or information about a triggering event that triggers the eighth information, and the performance metric information is used to determine at least one of a prediction accuracy, a complexity, or a signaling overhead of the first function.

24. The method according to claim 20, wherein the performance monitoring type is the second type of performance monitoring, and the method further comprises:
receiving ninth information sent by the terminal device, wherein the ninth information is used to indicate a first operation that the terminal device determines to perform on the first function, and the first operation comprises any one of: selection, activation, deactivation, switching, or fallback.

25. The method according to claim 24, further comprising:
sending tenth information to the terminal device, wherein the tenth information is response information for the ninth information.

26. The method according to any one of claims 23 to 25, further comprising at least one of:
receiving eleventh information sent by the terminal device, wherein the eleventh information is used to request to start monitoring the performance of the first function; or
sending twelfth information to the terminal device, wherein the twelfth information is used to respond to the eleventh information.

27. The method according to claim 20, wherein the performance monitoring type is the third type of performance monitoring, and the method further comprises:
receiving thirteenth information sent by the terminal device, wherein the thirteenth information comprises at least one of performance metric information or information about a triggering event that triggers the thirteenth information, and the performance metric information is used to determine at least one of a prediction accuracy, a complexity, or a signaling overhead of the first function.

28. The method according to any one of claims 19 to 27, wherein the second information comprises a performance metric type, and the performance metric type is used to indicate a performance metric supported by the terminal device.

29. The method according to claim 28, wherein the performance metric comprises at least one of:
a beam prediction accuracy, wherein the beam prediction accuracy is a probability that a predicted optimal reference signal resource includes an actual optimal reference signal resource, the predicted optimal reference signal resource is an optimal reference signal resource obtained through prediction by the first function, the actual optimal reference signal resource is an optimal reference signal resource obtained through actual measurement by the terminal device, the optimal reference signal resource comprises top N reference signal resources having strongest signal strengths in a predicted second reference signal resource set, and N is a positive integer;
a first signal strength difference, wherein the first signal strength difference is a difference between a first signal strength and a second signal strength, the first signal strength is an actual signal strength of the predicted optimal reference signal resource, and the second signal strength is an actual signal strength of the actual optimal reference signal resource;
a second signal strength difference, wherein the second signal strength difference is a difference between a first signal strength and a third signal strength, the first signal strength is an actual signal strength of the predicted optimal reference signal resource, and the third signal strength is a predicted signal strength of the predicted optimal reference signal resource;
a third signal strength difference, wherein the third signal strength difference is a difference between a second signal strength and a fourth signal strength, the second signal strength is an actual signal strength of the actual optimal reference signal resource, and the fourth signal strength is a predicted signal strength of the actual optimal reference signal resource;
a first signal strength prediction accuracy metric, wherein the first signal strength prediction accuracy metric is a probability that a first signal strength difference falls within a first difference range, or an average value of the first signal strength difference, or a value of a cumulative distribution function of the first signal strength difference at a first distribution proportion, and the first distribution proportion is greater than 0 and less than 1;
a second signal strength prediction accuracy metric, wherein the second signal strength prediction accuracy metric is a probability that a second signal strength difference falls within a first difference range, or an average value of the second signal strength difference, or a value of a cumulative distribution function of the second signal strength difference at a first distribution proportion;
a third signal strength prediction accuracy metric, wherein the third signal strength prediction accuracy metric is a probability that a third signal strength difference falls within a first difference range, or an average value of the third signal strength difference, or a value of a cumulative distribution function of the third signal strength difference at a first distribution proportion;
a throughput difference, wherein the throughput difference is a difference between a first throughput and a second throughput, the first throughput is a throughput calculated based on a first SINR, the second throughput is a throughput calculated based on a second SINR, the first SINR is an actual SINR of the predicted optimal reference signal resource, and the second SINR is an actual SINR of the actual optimal reference signal resource;
a throughput prediction accuracy metric, wherein the throughput prediction accuracy metric is a probability that the throughput difference falls within a second difference range, or an average value of the throughput difference, or a value of a cumulative distribution function of the throughput difference at a second distribution proportion, and the second distribution proportion is greater than 0 and less than 1;
a reference signal overhead, wherein the reference signal overhead is used to indicate a quantity of reference signal resources required by the first function;
an uplink resource overhead, wherein the uplink resource overhead is used to indicate a quantity of uplink resources occupied by information that needs to be reported to the network device for the first function to perform prediction and/or for monitoring the performance;
a prediction latency, wherein the prediction latency is a duration taken by the first function to perform beam prediction;
input data distribution information, wherein the input data distribution information is distribution information of input data of the first function;
output data distribution information, wherein the output data distribution information is distribution information of output data of the first function; or
a model complexity.

30. The method according to any one of claims 19 to 29, wherein the second information comprises an event type, and the event type is used to indicate a type of an event that is supported by the terminal device and that triggers monitoring the performance.

31. The method according to claim 30, wherein the event type comprises at least one of:
a first type of event, wherein the first type of event is used to indicate that a performance metric of an activated first function is worse than a first threshold;
a second type of event, wherein the second type of event is used to indicate that a performance metric of a deactivated first function is better than a second threshold;
a third type of event, wherein the third type of event is used to indicate that a performance metric of an activated first function is worse than a first threshold and that a performance metric of a deactivated first function is better than a second threshold; or
a fourth type of event, wherein the fourth type of event is used to indicate that a first difference is better than a fourth threshold, the first difference is a difference by which a second performance metric is better than a first performance metric, the first performance metric is a performance metric of an activated first function, and the second performance metric is a performance metric of a deactivated first function

32. The method according to any one of claims 19 to 31, wherein the third information comprises at least one of:
a reference signal resource identifier;
a signal strength; or
a confidence corresponding to a signal strength

33. The method according to claim 32, wherein:
the confidence is used to indicate the signal strength is obtained through actual measurement or through prediction; or
the signal strength is obtained through prediction, and the confidence is used to indicate a prediction accuracy corresponding to the signal strength.

34. The method according to any one of claims 19 to 33, wherein the first information is carried in a terminal capability report.

35. The method according to any one of claims 19 to 34, wherein instances of information included in the first information comprise mandatory information and optional information.

36. The method according to any one of claims 19 to 35, wherein the first function is deployed on the terminal device and/or the network device.

37. A terminal device comprising:
a transceiver module, configured to send first information to a network device, wherein the first information corresponds to a first function, and the first function is an artificial intelligence (AI) function and/or an AI model supported by the terminal device and used to perform beam prediction;
wherein the first information comprises at least one of:
second information, wherein the second information comprises information for monitoring a performance of the first function supported by the terminal device;
third information, wherein the third information comprises content information output by the first function supported by the terminal device;
fourth information, wherein the fourth information comprises a function identifier of the first function supported by the terminal device.

38. A network device comprising:
a transceiver module, configured to receive first information sent by a terminal device, wherein the first information corresponds to a first function, and the first function is an artificial intelligence (AI) function and/or an AI model supported by the terminal device and used to perform beam prediction;
wherein the first information comprises at least one of:
second information, wherein the second information comprises information for monitoring a performance of the first function supported by the terminal device;
third information, wherein the third information comprises content information output by the first function supported by the terminal device;
fourth information, wherein the fourth information comprises a function identifier of the first function supported by the terminal device.

39. A communication device comprising:
one or more processors;
wherein the communication device is configured to perform the information transmission method according to any one of claims 1 to 18 or claims 19 to 36.

40. A storage medium storing instructions that, when executed by a communication device, cause the communication device to perform the information transmission method according to any one of claims 1 to 18 or claims 19 to 36.

41. A communication system comprising a terminal device and a network device, wherein the terminal device is configured to perform the information transmission method according to any one of claims 1 to 18, and the network device is configured to perform the information transmission method according to any one of claims 19 to 36.
